(19) Europäisches Patentamt European Patent Office Office européen des brevets

(11) **EP 3 988 377 B1**

(12) **EUROPEAN PATENT SPECIFICATION**

(45) Date of publication and mention
of the grant of the patent:
**03.01.2024 Bulletin 2024/01**

(21) Application number: **20203538.2**

(22) Date of filing: **23.10.2020**

(51) International Patent Classification (IPC):
*B60L 53/14* (2019.01)        *B60L 53/22* (2019.01)
*B60L 53/24* (2019.01)        *B60L 55/00* (2019.01)

(52) Cooperative Patent Classification (CPC):
**B60L 55/00; B60L 53/14; B60L 53/22; B60L 53/24;**
B60L 2210/12; B60L 2210/14; B60L 2210/30;
B60L 2210/40; B60L 2220/42; B60L 2220/54;
Y02E 60/00; Y02T 10/64; Y02T 10/70;
Y02T 10/7072; Y02T 10/72;                (Cont.)

(54) **A VEHICLE ELECTRICAL SYSTEM**

ELEKTRISCHES FAHRZEUGSYSTEM

SYSTÈME ÉLECTRIQUE DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.04.2022 Bulletin 2022/17**

(73) Proprietors:
• **Ningbo Geely Automobile Research
  & Development Co. Ltd.
  Hangzhou Bay New District
  Ningbo 315336 (CN)**
• **Zhejiang Geely Holding Group Co., Ltd.
  Hangzhou, Zhejiang 310051 (CN)**

(72) Inventor: **HAGHBIN, Saeid**
**43352 Öjersjö (SE)**

(74) Representative: **Zacco Sweden AB
P.O. Box 5581
Löjtnantsgatan 21
114 85 Stockholm (SE)**

(56) References cited:
**EP-A1- 3 639 346        JP-A- 2013 132 197
US-A1- 2007 158 948    US-B2- 8 912 738**

EP 3 988 377 B1

(52) Cooperative Patent Classification (CPC): (Cont.)
    Y02T 90/14; Y04S 10/126

**Description**

TECHNICAL FIELD

The present disclosure relates to a vehicle electrical system and to a method for charging an electrical storage system of a vehicle electrical system.

The vehicle electrical system and associated method according to the disclosure can be implemented in a vehicle, such as an electric car or a hybrid electric car. However, the vehicle electrical system and associated method according to the disclosure is not restricted to this particular vehicle, but may alternatively be installed or implemented in another type of vehicle, such as a truck, a bus, a rail vehicle, a flying vehicle, a marine vessel, an off-road vehicle, a mining vehicle, an agriculture vehicle, a working vehicle such as a wheel loader or excavator, a forest vehicle such as harvesters or forwarders, a motorcycle or the like.

BACKGROUND

In the field of vehicle electrical systems, in particular electrical systems for plug-in electrical vehicles, there is a continuous demand for further improved performance, operating lifetime and cost-efficiency.

For example, document US 2010/096926 A1 discloses a traction inverter circuit including a first energy storage device configured to output a DC voltage, a first bi-directional DC-to-AC voltage inverter coupled to the first energy storage device, and a first electromechanical device. Furthermore, document WO 2018/227307 A1 discloses a switching circuit for controlling charging input from a DC source to at least one inverter circuit. Document US 2007/0158948 A1 discloses a coordination control device of a power output apparatus including a coordination control unit. Document JP 2013-132197A discloses an electric power conversion system for converting DC power supplied from an external power supply and supplying the power to a battery. Document US 8,912,738 B2 discloses a drive system and method for operating a drive system, including an electromotor, inverter and energy store.

However, despite the activities in the field, there is still a demand for a further improved vehicle electrical system, in particular in terms of improved compactness, weight and cost-efficiency.

SUMMARY

An object of the present disclosure is to provide a vehicle electrical system where the previously mentioned problems are avoided. This object is at least partly achieved by the features of the independent claims.

According to a first aspect of the present disclosure, there is provided a vehicle electrical system according to claim 1.

According to a second aspect of the present disclosure, there is provided a method for charging an electrical storage system of a vehicle electrical system according to claim 15.

In this way, a vehicle electrical system is provided that is capable of being charged by single-phase or three-phase AC having a wide range of input voltages, while also the internal electrical storage system may be configured for having various operating voltage levels. Moreover, the positioning of the DC/DC converter outside of the electrical powertrain, less powerful and thus less costly electronic power switches may be used. For example, a DC/DC converter located in the powertrain generally requires not only a large/heavy inductor for Buck operation but also relatively costly switches that may have maybe about 200 - 400 Ampere capacity, compared with having the DC/DC converter outside of the powertrain, thereby enabling use of the windings of electric machines as buck inductance and relatively low performance switches, for example with a rated maximal current capacity of only 30 Ampere.

In addition, by using the windings of the electrical machines as buck/boost inductances, the cost and weight for separate buck/boost inductors may be eliminated. Finally, the bi-directional design of the AC/DC converter and DC/DC converter enables the electrical storage system to be used for vehicle to grid power supply.

Further advantages are achieved by implementing one or several of the features of the dependent claims.

In some example embodiments, the electronic control system is operatively coupled to the first and second inverters and configured for, during a vehicle electrical storage system powered operating mode, controlling operation of the first and second inverters for control of the first and second multiphase electrical machines, respectively.

In some example embodiments, the electronic control system is operatively coupled to the bidirectional DC/DC converter and to the first and second inverters and configured for: during a vehicle charging operating mode, controlling operation of the DC/DC converter and first and/or second inverters for converting DC supplied from the AC/DC converter to modified DC and for supplying said modified DC to the electrical storage system via the common neutral points of the first and second multiphase electrical machines; and during a vehicle to grid operating mode, controlling operation of the first and/or second inverters and DC/DC converter for supplying DC from the electrical storage system to the DC/DC converter via the common neutral points of the first and second multiphase electrical machines, and for converting said DC to a modified DC, for supply to said AC/DC converter. Hence, the bidirectional character of the vehicle electrical system in general, and DC/DC converter in particular, enables a large versatility.

In some example embodiments, the electronic control system is operatively coupled to the bidirectional AC/DC converter and configured for: during a vehicle charging operating mode, controlling operation of the AC/DC converter for converting single-phase AC or multi-phase AC received from a vehicle external charging source via the charging terminal to DC, for supply of DC to said DC/DC converter; and during a vehicle to grid operating mode, controlling operation of the AC/DC converter for converting DC received from said DC/DC converter to single-phase AC or multi-phase AC, for supply of said AC to a vehicle external electrical load via the charging terminal. Hence, the bidirectional character of the vehicle electrical system in general, and AC/DC converter in particular, enables a large versatility.

In some example embodiments, the bidirectional buck/boost DC/DC converter is a non-isolated switching converter having two bidirectional switching arrangements, and the DC/C converter rely on the inductance of one or more stator windings of each of the first and second multiphase electrical machines as energy storage element for accomplishing a voltage step-down during a vehicle charging mode and a voltage step-up during a vehicle to grid operating mode. Thereby, a separate inductor element having a significant weight and space requirement may be omitted. For example, an inductor coil for a buck/boost DC/DC converter for a 5 - 10 kW charger for an electrical vehicle may typically have a weight of about 5 - 7 kg.

In some example embodiments, the AC/DC converter has a grid side with two or three connection points for receiving and outputting single-phase or three-phase AC, and a motor side with first and second connection points for receiving and outputting DC, and the DC/DC converter comprises a first bidirectional switching arrangement configured for selectively opening and closing an electrical connection between the first connection point of the AC/DC converter and the common neutral point of the first multiphase electrical machines, and a second bidirectional switching arrangement configured for selectively opening and closing an electrical connection between the common neutral points of the first and second multiphase electrical machines. Thereby, a relatively cost-efficient DC/DC converter design is accomplished.

In some example embodiments, the control system, during a vehicle charging operating mode, is configured for operating the DC/DC converter in a voltage step-down involving control of each of the first and second bidirectional switching arrangements to have alternating on and off periods, such that during a first phase when the first bidirectional switching arrangement is on and the second bidirectional switching arrangement is off, a current can flow from the first connection point of the AC/DC converter, via the first bidirectional switching arrangement, one or more stator windings of the first multiphase electrical machine, the first inverter, the second inverter while bypassing the electrical storage system or not, one or more stator windings of the second multiphase electrical machine, and back to the second connection point of the AC/DC converter, and such that during a second phase when the first bidirectional switching arrangement is off and the second bidirectional switching arrangement is on, a charging current can flow from a negative pole of the electrical storage system, via the second inverter, one or more stator windings of the second multiphase electrical machine, the second bidirectional switching arrangement, one or more stator windings of the first multiphase electrical machine, the first inverter, and back to a positive terminal of the electrical storage system. This design provides an easily implemented and cost-efficient overall design of the vehicle electrical system with high versatility in terms of input voltage level and electrical storage system voltage level.

In some example embodiments, the control system, during a vehicle charging operating mode, is configured for operating the first bidirectional switching arrangement with a first set of alternating on and off periods, and operating the second bidirectional switching arrangement with a second set of alternating on and off periods, which are arranged more or less synchronized and inverted to the first set of alternating on and off periods. Thereby, a straightforward and relatively easily implemented control strategy of the DC/DC converter is provided.

In some example embodiments, the control system is configured for charging the electrical storage system, using electrical energy supplied from the vehicle external charging source via the AC/DC converter, in a voltage step-down mode by operating the first bidirectional switching arrangement and the second bidirectional switching arrangement synchronised and with alternating on and off periods.

In some example embodiments, the control system is configured for charging the electrical storage system in said voltage step-down mode by setting the first bidirectional switching arrangement in a closed state when the second bidirectional switching arrangement is set in an open state, and oppositely.

In some example embodiments, each of the first and second inverters includes at least one inverter leg for each phase of the associated multiphase electrical machine, and each inverter leg includes a upper switch associated with a positive DC rail connected in series with a lower switch associated with a negative DC rail, wherein the control system is configured for, during said vehicle charging operating mode, setting all upper and lower switches of the first and second inverters in an open state during both the first and second phase. This approach may result in less electrical losses because of the elimination of switching operation of the inverter switches during the charging operating mode.

Alternatively, the control system is configured for, during said vehicle charging operating mode, setting all upper and lower switches of the first and second inverters in an open state during both the first and second phase, setting all upper and lower switches of the first inverter and all lower switches of the second inverter in an open state during both the first and second phase, and setting one, two, three or more of the upper switches of the second inverter in a closed state during the first phase, and setting all of the upper switches of the second inverter in an open state during the second phase. Thereby, the inductance of one or more specific stator windings of the second electrical machine may be utilized for accomplishing a desired buck conversion during charging operating mode.

Alternatively, the control system is configured for, during said vehicle charging operating mode, setting all upper and lower switches of the first and second inverters in an open state during both the first and second phase, setting all upper and lower switches of the second inverter and all upper switches of the first inverter in an open state during both the first and second phase, and setting one, two, three or more of the lower switches of the first inverter in a closed state during the first phase, and setting all of the lower switches of the first inverter in an open state during the second phase. Thereby, the inductance of one or more specific stator windings of the first electrical machine may be utilized for accomplishing a desired buck conversion during charging operating mode.

In some example embodiments, wherein the electrical connection extending from the common neutral point of the first multiphase electrical machine to the common neutral point of the second multiphase electrical machine via the second bidirectional switching arrangement is free from any substantial inductor. Thereby, substantial weight reduction may be accomplished.

In some example embodiments, the vehicle electrical system is free from a DC/DC converter in an electrical power supply path extending between the electrical storage system and any of the first and second inverter. Thereby, a less costly DC/DC converter may be implemented in view of the lower current levels associated with single-phase or three-phase charging, compared with relatively costly and high current levels switches arranged within the powertrain.

In some example embodiments, the AC/DC converter is a single-phase or three-phase active front-end rectifier including a plurality of switch legs connected between a positive rail and a negative rail of a DC link, wherein each switch leg has at least two switches connected in series via an intermediate conductor, wherein a grid side of the AC/DC converter includes two or three connection points electrically connected to the charging terminal for receiving and outputting single-phase or three-phase AC to/from a vehicle external charging source or vehicle external electrical load, wherein each of said two or three connections is electrically connected to a separate intermediate conductor of the plurality of switch legs.

In some example embodiments, the control system, during a vehicle to grid operating mode, is configured for operating the DC/DC converter in a voltage step-up involving control of each of the first and second bidirectional switching arrangements to have alternating on and off periods, such that during a first phase, when the first bidirectional switching arrangement is off and the second bidirectional switching arrangement is on, a current can flow from a positive pole of the electrical storage system, the first inverter, one or more stator windings of the first multiphase electrical machine, the second bidirectional switching arrangement, one or more stator windings of the second multiphase electrical machine, the second inverter, and back to a negative terminal of the electrical storage system, and such that during a second phase, when the first bidirectional switching arrangement is on and the second bidirectional switching arrangement is off, a current can flow from the second connection point of the AC/DC converter, via one or more stator windings of the second multiphase electrical machine, the second inverter, the electrical storage system, the first inverter, one or more stator windings of the first multiphase electrical machine, the first bidirectional switching arrangement and back to the first connection point of the AC/DC converter. Thereby, high versatility of the vehicle electrical system is accomplished.

In some example embodiments, each of the first and second inverters includes one inverter leg for each phase of the associated multiphase electrical machine, and each inverter leg includes a upper switch associated with a positive DC rail connected in series with a lower switch associated with a negative DC rail, wherein the control system is configured for, during said vehicle to grid operating mode, setting one, two, three or more of the upper switches of the first inverter in a closed state during both the first and second phase, setting one, two, three or more of the lower switches of the second inverter in a closed state during both the first and second phase, and setting all the lower switches of the first inverter and all the upper switches of the second inverter in an open state during both the first and second phase. Control of the switches of the first and second inverters may provide various levels of inductance that is suitable for each specific situation and implementation.

In some example embodiments, the control system is configured for, during vehicle to grid operating mode or vehicle charging operating mode, controlling the first and/or second inverter based on the angular position of the rotor of the first and/or second multiphase electrical machine. Thereby, the desired total inductance of the buck/boost operation may be better selected according to the specific circumstances.

In some example embodiments, the control system is configured for, during vehicle to grid operating mode, selecting which of the one or more upper switches of the first inverter and which of the one or more lower switches of the second inverter should be set in a closed state during the first and second phase, based on the angular position of the rotor of the first and/or second multiphase electrical machine, and/or during vehicle charging operating mode, selecting which of the one or more upper switches of the second inverter in a closed state during the first phase, or which of the one or more lower switches of the first inverter should be set in the closed state during the first phase, based on the angular position of the rotor of the first and/or second multiphase electrical machine. Thereby, the desired total inductance of the buck/boost operation may be better selected according to the specific circumstances.

In some example embodiments, wherein the control system is configured for, during vehicle to grid operating mode, selecting which of the one or more upper switches of the first inverter and which of the one or more lower switches of the second inverter should be set in a closed state during the first and second phase, based on a maximal current of the switches of the first and/or second inverter, and/or during vehicle charging operating mode, selecting which of the one or more upper switches of the second inverter in a closed state during the first phase, or which of the one or more lower switches of the first inverter should be set in the closed state during the first phase, based on a maximal current of the switches of the first and/or second inverter. Clearly, if a charging or discharging current exceeds the maximal rated current value of any switch of the first and/or second inverter in an operating setting involving routing of said current through a singular stator winding, the charging/discharging current must be divided between multiple different switches of said first and/or second inverter for reducing the individual load on each switch.

In some example embodiments, the method additionally comprises the steps of: providing the DC/DC converter with a first bidirectional switching arrangement configured for selectively opening and closing an electrical connection between a first connection point of the AC/DC converter and the common neutral point of the first multiphase electrical machines, and a second bidirectional switching arrangement configured for selectively opening and closing an electrical connection between the common neutral points of the first and second multiphase electrical machines; and controlling each of the first and second bidirectional switching arrangements to have alternating on and off periods for accomplishing a voltage step-down during a vehicle charging operating mode, wherein during a first phase when the first bidirectional switching arrangement is on and the second bidirectional switching arrangement is off, a current flows from the first connection point of the AC/DC converter, via the first bidirectional switching arrangement, one or more stator windings of the first multiphase electrical machine, the first inverter, the second inverter while bypassing the electrical storage system or not, one or more stator windings of the second multiphase electrical machine, and back to the second connection point of the AC/DC converter, and wherein during a second phase when the first bidirectional switching arrangement is off and the second bidirectional switching arrangement is on, a charging current flows from a negative pole of the electrical storage system, via the second inverter, one or more stator windings of the second multiphase electrical machine, the second bidirectional switching arrangement, one or more stator windings of the first multiphase electrical machine, the first inverter, and back to a positive terminal of the electrical storage system.

In some example embodiments, the method for charging the electrical storage system additionally comprises the steps of: providing the DC/DC converter with a first bidirectional switching arrangement configured for selectively opening and closing an electrical connection between a first connection point of the AC/DC converter and the common neutral point of the first multiphase electrical machines, and a second bidirectional switching arrangement configured for selectively opening and closing an electrical connection between the common neutral points of the first and second multiphase electrical machines; and controlling each of the first and second bidirectional switching arrangements to have alternating on and off periods for accomplishing a voltage step-up during a vehicle to grid operating mode, wherein during a first phase, when the first bidirectional switching arrangement is off and the second bidirectional switching arrangement is on, a current flows from a positive pole of the electrical storage system, the first inverter, one or more stator windings of the first multiphase electrical machine, the second bidirectional switching arrangement, one or more stator windings of the second multiphase electrical machine, the second inverter, and back to a negative terminal of the electrical storage system, and wherein during a second phase, when the first bidirectional switching arrangement is on and the second bidirectional switching arrangement is off, a current flows from the second connection point of the AC/DC converter, via one or more stator windings of the second multiphase electrical machine, the second inverter, the electrical storage system, the first inverter, one or more stator windings of the first multiphase electrical machine, the first bidirectional switching arrangement and back to the first connection point of the AC/DC converter.

Further features and advantages of the invention will become apparent when studying the appended claims and the following description. The skilled person in the art realizes that different features of the present disclosure may be combined to create embodiments other than those explicitly described hereinabove and below, without departing from the scope of the present disclosure.

BRIEF DESCRIPTION OF DRAWINGS

The disclosure will be described in detail in the following, with reference to the attached drawings, in which

Fig. 1        shows schematically a side view of a vehicle including the vehicle electrical system according to the disclosure,

Fig. 2        shows schematically a layout of the vehicle electrical system according to the disclosure,

Fig. 3        shows an example embodiment of a more detailed layout of the electrical system according to the disclosure,

Fig. 4        shows schematically one example embodiment of the operation of the first and second switching arrangements,

Fig. 5A-5B    show schematically a first strategy for controlling a charging current of the electrical system according to the disclosure,

Fig. 6A-6B    show schematically a second strategy for controlling a charging current of the electrical system according to the disclosure,

Fig. 7A-7B    show schematically a third strategy for controlling a charging current of the electrical system according to the disclosure

Fig. 8A-8B    show schematically a strategy for controlling a discharging current of the electrical system during a vehicle to grid operating mode according to the disclosure,

Fig. 9        shows schematically the layout of figure 3 with some more details relating to electrical filter arrangements according to the disclosure,

Fig. 10       shows schematically a three-phase version of the electrical system according to the disclosure,

Fig. 11-13    show schematically the basic steps of some methods for providing and operating the electrical system according to the disclosure,

Fig. 14       shows schematically the layout of figure 10 with some more details relating to electrical filter arrangements according to the disclosure, and

Fig. 15       shows schematically that the three-phase version of the electrical system may be connected with single-phase supply without any hardware modifications.

## DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

The vehicle electrical system according to the present disclosure is configured for being implemented in a hybrid electric vehicle or a full electric vehicle, such as a car.

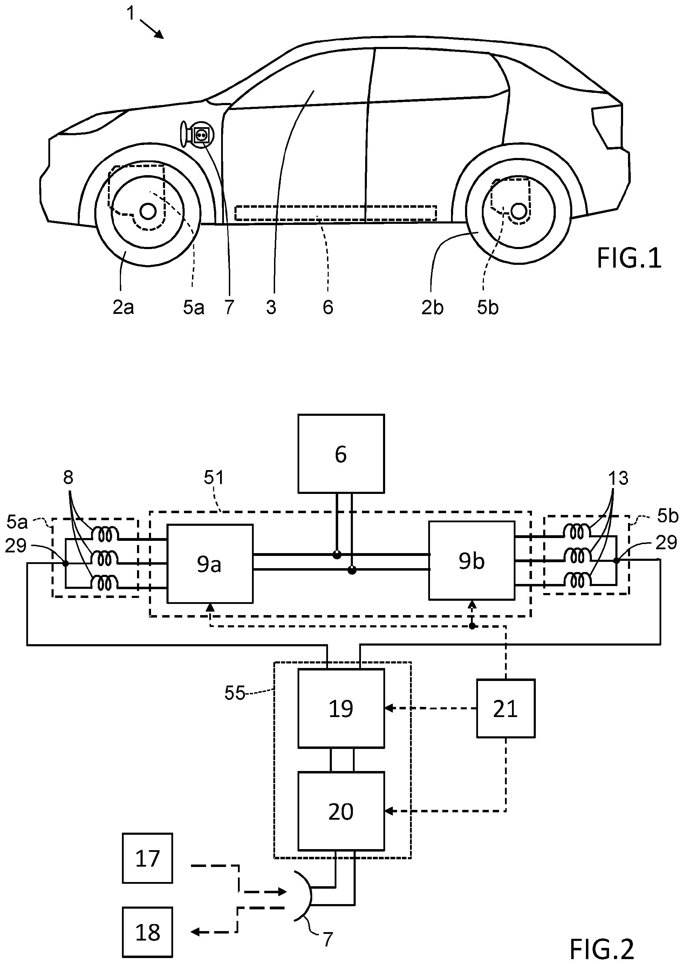

Figure 1 schematically shows a side-view of an example type of vehicle 1 that may be implemented with the vehicle electrical system. The electrical vehicle 1 is here illustrated in form of a car having front wheels 2a, rear wheels 2b, a passenger compartment 3, luggage compartment and a vehicle powertrain including at least two electrical propulsion motors 5a, 5b, such as two multi-phase AC motors or two DC motors. The motors 5a, 5b may for example be drivingly connected to front and rear axis, respectively, or to right and left wheels of a common axis.

The vehicle powertrain further comprises an electrical storage system 6, such as for example a battery or a combination of battery and a capacitor, for vehicle propulsion. If the electrical vehicle is a plug-in vehicle, i.e. being configured for charging of the electrical storage system by electrical energy from an external grid, the vehicle may additionally include for example a terminal 7 configured for receiving an external charging connector for charging of the electrical storage system. The terminal 7 may advantageously be accessible from the outside of the vehicle 1. The terminal 7 may alternatively be a pad arranged for receiving/transmitting power from/to an external electrical power source/load wirelessly.

The vehicle powertrain may additionally include for example a combustion engine, a fuel cell or the like.

Figure 2 shows schematically a first example embodiment of the vehicle electrical system according to the disclosure. Specifically, the vehicle electrical system may comprise an electrical storage system 6, a first multiphase electrical machine 5a having a plurality of stator windings 8 connected to common neutral point 29, a first inverter 9a operatively connected to the electrical storage system 6 and to the first multiphase electrical machine 5a, wherein the first inverter 9a has a plurality of switch legs with switches, a second multiphase electrical machine 5b having a plurality of stator windings 13 connected to a common neutral point 29, a second inverter 9b operatively connected to the electrical storage system 6 and to the second multiphase electrical machine 5b, wherein the second inverter 9b has a plurality of switch legs with switches.

The plurality of stator windings 8, 13 of each of the first and second electric motors 5a, 5b are thus arranged in star connection.

The vehicle electrical system further comprises a bidirectional buck-boost DC/DC converter 19 operatively connected to the common neutral point 29 of the first multiphase electrical machine 5a and to the common neutral point 29 of the second multiphase electrical machine 5b and configured for using at least one stator winding 8, 13 of each of the first and second multiphase electrical machines 5a, 5b as buck-boost inductance.

The vehicle electrical system further comprises a bidirectional AC/DC converter 20 operatively connected to the DC/DC converter 19 and to a charging terminal 7 with or without an intermediate electrical filter arrangement, and an electronic control system 21 for controlling operation of the vehicle electrical system.

For charging the electrical storage system 6 of the vehicle electrical system with electrical power from a vehicle external charging source 17, a charging connector of external charging source 17 may be connected to the charging terminal 7 of the electrical storage system 6. Similarly, for powering a vehicle external electrical load 18 with electrical power from the electrical storage system 6, an electrical connector of external electrical load 18 may be connected to the charging terminal 7 of the electrical storage system 6.

The first and second inverters 9a, 9b, which are arranged for transforming DC received from the electrical storage system 6 to multiphase AC with appropriate frequency and/or amplitude for driving the first and second electrical machines 5a, 5b, may have various conventional circuit designs, such as for example one switch leg with two electronic power switches for each phase.

According to some example embodiments, the electronic control system 21 is operatively coupled to the switches of the first and second inverters 9a, 9b and configured for, during a vehicle electrical storage system powered operating mode, i.e. electrical propulsion operating mode, controlling operation of the switches of the first and second inverters 9a, 9b for control of the first and second multiphase electrical machines 5a, 5b, respectively.

The DC/DC converter 20 is for example a non-isolated switch mode DC-DC Converter having a plurality of electronic power switches for providing the desired step-up or step-down in voltage level.

According to some example embodiments, the electronic control system 21 is operatively coupled to the switches of the bidirectional DC/DC converter 19 and to the switches of the first and second inverters 9a, 9b and configured for, during a charging operating mode involving charging of the electrical storage system 6, controlling operation of the switches of the DC/DC converter 19, and possibly also first and/or second inverters 9a, 9b depending on charging strategy, for converting DC supplied from the AC/DC converter 20 to modified DC and for supplying said modified DC to the electrical storage system 6 via the common neutral points 29 of the first and second multiphase electrical machines 5a, 5b.

In the charging operating mode, the modified DC differs from the DC supplied from the AC/DC converter 20 in terms of voltage level. In particular, during charging of the electrical storage system 6, the DC/DC converter operates as a Buck converter, i.e. a voltage step-down converter, while using the inductances of the stator windings 8, 13 as Buck inductances. Hence, the DC supplied from the AC/DC converter 20 during charging of the electrical storage system 6 has a higher voltage level than the voltage level of the electrical storage system 6. This also enables power factor correction (PFC), such that PF=1 may be accomplished.

Furthermore, according to some example embodiments, the electronic control system 21 is operatively coupled to the switches of the bidirectional DC/DC converter 19 and to the switches of the first and second inverters 9a, 9b and configured for, during a vehicle to grid operating mode, i.e. an operating mode involving supply of electrical power from the electrical storage system 6 to a vehicle external electrical load 18, controlling operation of the switches of the first and/or second inverters 9a, 9b and DC/DC converter 19 for supplying DC from the electrical storage system 6 to the DC/DC converter 19 via the common neutral points 29 of the first and second multiphase electrical machines 5a, 5b, and for converting said DC to a modified DC, for supply to said AC/DC converter.

In the vehicle to grid operating mode, the modified DC differs from the DC supplied from the electrical storage system 6 in terms of voltage level. In particular, during vehicle to grid operating mode, the DC/DC converter operates as a Boost converter, i.e. a voltage step-up converter, while using the inductances of the stator windings 8, 13 as Boost inductances. Hence, the DC supplied to the AC/DC converter 20 during vehicle to grid operating mode has a higher voltage level than the voltage level of the electrical storage system 6.

The bidirectional AC/DC converter 20 is an active single-phase or three-phase rectifier, also referred to as an active front end rectifier. The bidirectional AC/DC converter 20 typically has a series inductor connected in the single phase, or in all three phases, and a sinusoidal source current is accomplished directly, by high-frequency switching of the AC/DC converter switches. The output DC voltage level is for example controlled by pulse width modulation (PWM)-based high-frequency switching of the AC/DC converter switches.

The AC/DC converter 20 and DC/DC converter 19 may for example be jointly assembled on a grid front end circuit board 55. This circuit board may, depending on the specific implementation, circumstance and overall electrical circuit design, for example be located adjacent the charging terminal 7. The first and second inverters 9a, 9b may, for the same reasons, for example be assembled on a dual inverter circuit board. Alternatively, the AC/DC converter 20, the DC/DC converter 19 and the first and second inverters 9a, 9b may even be assembled on a common circuit board.

The electronic control system 21 may include individual hardware circuitry, using software functioning in conjunction with a programmed microprocessor or general purpose computer, using one or more Application Specific Integrated Circuits (ASICs) and/or using one or more Digital Signal Processors (DSPs) for accomplishing the desired functionality of the electrical system by appreciate control of the switches of the converters 19, 20 and inverters 9a, 9b. The electronic control system 21, which is merely schematically illustrated in the figures, may have centralised structure with a main controller submitting instructions to sub controllers via data buses, and is typically part of a larger electrical system including for example electrical storage system controller, etc.

According to some example embodiments, the electronic control system 21 is operatively coupled to the switches of the bidirectional AC/DC converter and configured for, during the vehicle charging operating mode, controlling operation of the switches of AC/DC converter 20 for converting single-phase AC or multi-phase AC received from a vehicle external charging source 17 via the charging terminal 7 to DC, for supply to said DC/DC converter.

According to some example embodiments, the electronic control system 21 is operatively coupled to the switches of the bidirectional AC/DC converter and configured for, during the vehicle to grid operating mode, controlling operation of the switches of the AC/DC converter for converting DC received from said DC/DC converter 19 to single-phase AC or multi-phase AC, for supply of AC to the vehicle external electrical load 18 via the charging terminal 7.

The vehicle electrical system may be deemed including an electrical powertrain part and a grid side charging/discharging part, wherein the electrical powertrain part includes the electrical storage system 6, the first and second inverters 9a, 9b and the first and second electrical machines 5a, 5b, and wherein the grid side charging/discharging part includes the DC/DC converter 19, the AC/DC converter 20 and the charging terminal 7.

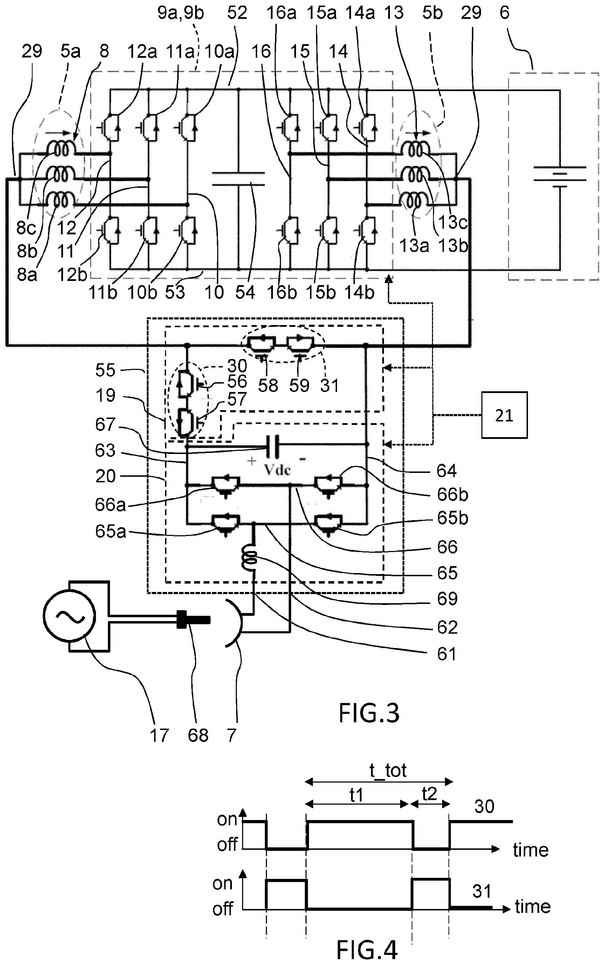

Figure 3 shows an example embodiment of a more detailed implementation of the AC/DC converter, the DC/DC converter and the first and second inverters 9a, 9b, as well their mutual internal relationship and connections. The vehicle electrical system comprises a vehicle on-board electrical storage system 6 connected to a positive rail 52 and a negative rail 53, a first multiphase electrical machine 5a having a plurality of stator windings 8, a first inverter 9a connected to the electrical storage system 6 and to the first multiphase electrical machine 5a, wherein the first inverter 9a has a plurality of switch legs 10, 11, 12 with switches 10a, 10b, 11a, 11b, 12a, 12b, a second multiphase electrical machine 5b having a plurality of stator windings 13, a second inverter 9b connected to the electrical storage system 6 and to the second multiphase electrical machine 5b, wherein the second inverter 9b has a plurality of switch legs 14, 15, 16 with switches 14a, 14b, 15a, 15b, 16a, 16b.

The electrical storage system 6 may include a high-voltage battery composed of for example lithium-ion battery cells, lithium-sulphur battery cells, or solid-state battery cells, or the like. The high-voltage battery may for example have a rated voltage level in the range of 100V - 1500V. The battery capacity in terms of kWh depends on factors such as whether the vehicle is a hybrid vehicle having an additional power source, such as a combustion engine, or whether the vehicle is a pure electric vehicle, and the desired operating range, etc. The capacity may for example be about 10 - 150 kWh.

However, in certain applications such as for example of so called "mild hybrid" systems, the electrical storage system 6 may include a battery nominal output voltage of for example about of 24V - 59V, in particular 24V or 48V.

The first and second multiphase electrical machines 5a, 5b may for example be three-phase, five-phase, or seven-phase electrical machines, or the like. A three-phase electrical machine may for example have three stator windings, each divided in two halves that are arranged on opposite sides in the stator. The three stator windings may then be disposed 120 degrees apart from each other, and each stator winding may then be deemed having two magnetic poles, i.e. a three-phase two-pole electrical machine. However, the stator windings may alternatively be distributed into four sections, wherein each section is displaced 90 degrees apart from each other. Such a stator winding is deemed having four poles, i.e. a three-phase four-pole electrical machine. Other stator winding arrangements are possible, such as six-pole arrangement, or the like.

The first and second electrical machines 5a, 5b may for example be permanent magnet synchronous motors or AC induction motors or switched reluctance motors.

In the example embodiment described with reference to figure 3, each of the first and second inverters 9a, 9b has three switch legs, i.e. a first switch leg 10, 14, and second switch leg 11, 15 and a third switch leg 12, 16, all connected in parallel between the positive and negative rails 52, 53. Each of the switch legs 10, 11, 12, 14, 15, 16 of the first and second inverters 9a, 9b is supplied with DC from the electrical storage system 6 and the control system may then control the switches to execute appropriate switching operation of the inverter switches 10a, 10b, 11a, 11b, 12a, 12b, 14a, 14b, 15a, 15b, 16a, 16b for providing a phase-shifted output voltage to the stator windings 8, 13 of first and second electrical machines 5a, 5b, such as for example a more or less a three-phase sinusoidal characteristic.

Each switch leg 10, 11, 12, 14, 15, 16 may have two switches, e.g. a first switch 10a, 11a, 12a, 14a, 15a, 16a and a second switch 10b, 11b, 12b, 14b, 15b, 16b. A first stator winding 8a of the first electrical machine 5a may be connected to the first switch leg 10, between the first and second switches 10a, 10b, of the first inverter 9a, a second stator winding 8b of the first electrical machine 5a may be connected to the second switch leg 11, between the first and second switches 11a, 11b, of the first inverter 9a, and a third stator winding 8c of the first electrical machine 5a may be connected to the third switch leg 12, between the first and second switches 12a, 12b, of the first inverter 9a. Similarly, a first stator winding 13a of the second electrical machine 5b may be connected to the first switch leg 14, between the first and second switches 14a, 14b, of the second inverter 9b, a second stator winding 13b of the second electrical machine 5b may be connected to the second switch leg 15, between the first and second switches 15a, 15b, of the second inverter 9b, and a third stator winding 13c of the second electrical machine 5b may be connected to the third switch leg 16, between the first and second switches 16a, 16b, of the second inverter 9b.

However, other inverter designs are possible within the scope of the present application.

The switches 10a, 10b, 11a, 11b, 12a, 12b, 14a, 14b, 15a, 15b, 16a, 16b may for example be power transistors for controlling torque and/or speed of the first and second multiphase electrical machine. For example, the switches may be Insulated Gate Bipolar Transistor (IGBTs) or MOSFETs.

Each of the switches 10a, 10b, 11a, 11b, 12a, 12b, 14a, 14b, 15a, 15b, 16a, 16b of the first and second inverters 9a, 9b is provided with a parallel-connected reverse diode, also known as freewheeling diode, body diode or snubber diode. The reverse diode may for example be an intrinsic diode, i.e. a reverse diode functionality. For example, MOSTFET types transistors typically include intrinsic reverse diode functionality due to their design and structure. However, some IGBTs generally do not have such intrinsic reverse diodes and may then instead be provided with an extrinsic reverse diode, i.e. physically individual diode separate from the transistor, connected in parallel with the transistor. Moreover, also MOSFET transistors may be provided with an extrinsic reverse diode. Reverse diodes are generally needed for avoiding that large negative voltage may build up over the transistor when switching an inductive load, because an inductive load typically generate a large negative voltage during negative current changes, thereby potentially destroying the transistor.

A DC-link capacitor 54 may be connected between the positive and negative rails 53, 54.

In the example embodiment of figure 3, the bidirectional buck/boost DC/DC converter is a non-isolated switching converter having two bidirectional switching arrangements, i.e. a first bidirectional switching arrangement 30 and a second bidirectional switching arrangement 31. Moreover, the bidirectional buck/boost DC/DC converter rely on the inductance of one or more stator windings 8, 13 of each of the first and second multiphase electrical machines 5a, 5b as energy storage element for accomplishing a voltage step-down during a vehicle charging mode and a voltage step-up during a vehicle to grid operating mode.

The first bidirectional switching arrangement 30 may for example include a first electronic switch 56 connected in series with a second electronic switch 57, which is oriented oppositely to the first electronic switch 56. In other words, the collector terminals of the first and second electronic switches 56, 57 may be mutually connected, or the emitter terminals of the first and second electronic switches 56, 57 may be mutually connected. The second bidirectional switching arrangement 31 may have an identical design, i.e. a first electronic switch 58 connected in series with, and opposite to, a second electronic switch 59.

Each of the switches 56-59 of the first and second bidirectional switching arrangements 30, 31 may be provided with a parallel-connected reverse diode.

In the example embodiment of figure 3, the AC/DC converter 20 has a grid side with two connection points 61, 62 for receiving and outputting single-phase AC to and from the charging terminal 7 and a motor side with first and second connection points 63, 64 for receiving and outputting DC to and from the DC/DC converter 19.

The first bidirectional switching arrangement 30 of the DC/DC converter 19 is operatively connected to the first connection point 63 of the AC/DC converter 20 and the common neutral point 29 of the first multiphase electrical machine 5a. Moreover, the first bidirectional switching arrangement 30 of the DC/DC converter 19 is configured for selectively opening and closing an electrical connection between the first connection point 63 of the AC/DC converter 20 and the common neutral point 29 of the first multiphase electrical machine 5a for controlling current flow between said points 63, 29.

The second bidirectional switching arrangement 31 operatively connected to the common neutral points 29 of the first and second multiphase electrical machines 5a, 5b and configured for selectively opening and closing an electrical connection between the common neutral points of the first and second multiphase electrical machines 5a, 5b.

In addition, the second connection point 64 of the AC/DC converter 20 may be permanently electrically connected with the common neutral point 29 of the second multiphase electrical machine 5b.

The electrical connection extending from the common neutral point 29 of the first multiphase electrical machine 5a to the common neutral point of the second multiphase electrical machine 5b via the second bidirectional switching arrangement 31 may be free from any substantial inductor. This means that no inductive electrical component is needed in said electrical connection extending between said common neutral points 29 for accomplishing the desired voltage step-down conversion. On the other hand, if an inductive component nevertheless is included in said electrical connection extending between said common neutral points 29, the inductance level thereof may be relatively small, such as for example less than 25%, specifically less than 10%, of the inductance of a single stator winding of any of the first and second multiphase electrical machines 5a,5b for avoiding too much weight.

In addition, the vehicle electrical system may be free from a DC/DC converter in an electrical power supply path extending between the electrical storage system 6 and any of the first and second inverter 9a, 9b. This has the advantage of avoiding costly high-power switches associated with for example a 50 - 200 kW DC/DC converter located in the drivetrain, compared with a for example 5 - 20 kW DC/DC charging converter arranged outside of the drivetrain.

In the example embodiment of figure 3, the AC/DC converter 20 is a single-phase active front-end rectifier including a plurality of switch legs 65, 66 connected between a positive rail associated with the first connection point 63 of the AC/DC converter 20 and a negative rail associated with the second connection point 64 of the AC/DC converter 20, wherein each switch leg has at least two switches 65a, 65b, 66a, 66b connected in series via an intermediate conductor. The AC/DC converter 20 may also include a DC-link capacitor 67 arranged between the first and second connection points 63, 64.

The grid side of the AC/DC converter 20 includes two connection points 61, 62 electrically connected to the charging terminal 7 for receiving single-phase AC, i.e. a phase line and a neutral line, from a vehicle external charging source 17 or outputting single-phase AC to a vehicle external electrical load, wherein each of said two connections is electrically connected to a separate intermediate conductor of the plurality of switch legs 65, 66, and wherein the phase line includes an inductor element 69 between the first connection point 61 and first switch leg 65.

For charging of the electrical storage system 6 of the vehicle electrical system according to figure 3, a charging connector 68 of the external AC charging source 17 may be connected to the charging terminal 7 of the vehicle electrical system. The charging source 17 may for example supply 240V single-phase AC and the electrical storage system 6 may for example have a nominal voltage level of 200V.

For reducing the charging voltage level, the control system 21 is configured to operate the first and second bidirectional switching arrangements 30, 31 of the DC/DC converter 19 with synchronised and alternating on and off periods. Thereby, a straightforward and easily implemented step-down solution is accomplished that also can be implemented without changing or customizing the inverters and/or electrical machines, and without requiring a DC/DC converter within the powertrain.

Figure 4 schematically illustrates how the first and second bidirectional switching arrangements 30, 31 may operate with synchronized alternating on and off periods, wherein the first bidirectional switching arrangement 30 is on during a first phase, i.e. time period t1, and subsequently off during a second phase, i.e. time period t2.

The ratio of t1 to t_tot is referred to the as the duty rate of the DC/DC converter and controls the voltage step down level. The second bidirectional switching arrangement 31 may be operating substantially opposite to the first bidirectional switching arrangement 30, such that the second bidirectional switching arrangement 31 is off during the first phase (time period) t1 and subsequently on during the second phase (time period) t2. The switching rate, i.e. switching frequency equals 1/t_tot.

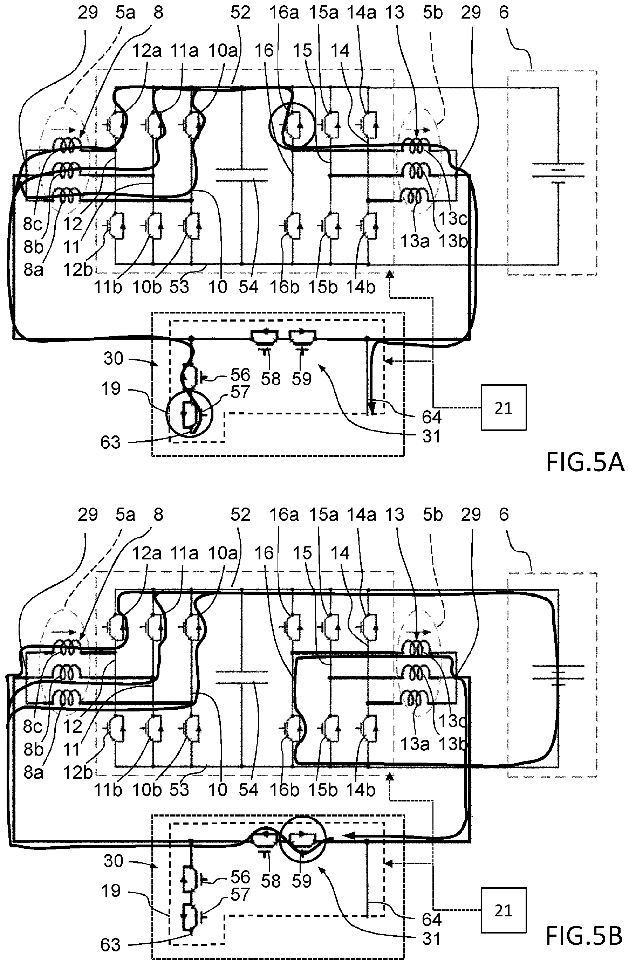

Figures 5A and 5B shows a first example embodiment of the current path during the said alternating on and off periods during charging of the electrical storage system 6. Some of the switches of the first and second inverters 9a, 9b may also be controlled in a synchronised manner with the switches 56-69 of the DC/DC converter 19 for obtaining a favourable effect on the charging behaviour of the vehicle electric system.

Specifically, the inductance of each individual stator winding 8, 13 of the first and second electrical machines 5a, 5b is typically dependent on the angular position of the rotor within the electrical machine 5a, 5b. The inductance of the stator winding with largest inductance, at a specific angular position of the electrical machine, may for example be about 1.5-2 times larger than stator winding with smallest inductance. Each of the first and second electrical machines 5a, 5b may be equipped with a rotor angular position sensor for identifying the angular position of the rotor, and thus for determining the inductance of each stator winding at the present angular position.

Hence, by appropriate control of the switches 10a-12b, 14a-16b of the first and second inverters 9a, 9b, the charging current may be routed through a specific stator winding of the first and/or second electrical machines 5a, 5b, or through all stator windings of the first and/or second electrical machine 5a, 5b. Thereby, a total inductance L_tot of the charging circuit may be selected, depending on the circumstances. A total inductance L_tot of two individual series connected inductances L1, L2 may be determined as: $L_{tot} = L1 + L2$, and a total inductance L_totof three individual parallel! connected inductances L1, L2, L3 may be determined as: $\frac{1}{L\_tot} = \frac{1}{L1} + \frac{1}{L2} + \frac{1}{L3}$.

Moreover, the level of inductance required for operating the Buck converter is reduced when switching rate is increased. Consequently, the are at least two parameters that may be controlled during for example Buck charging of the battery for accomplishing a desired result in terms of efficiency, harmonic noise, current ripples, etc. namely switching rate and circuit inductance level.

These two parameters have in general the following effects:

| | High total inductance [L_tot] | Low total inductance [L_tot] |
|---|---|---|
| High switching frequency | Increased losses<br>Reduced current ripples<br>Reduced harmonic noise | Increased current ripples;<br>Increased losses<br>Reduced harmonic noise |
| Low switching frequency | Increased efficiency;<br>Increased harmonic noise<br>Reduced current ripples | Increased current ripples;<br>Increased efficiency;<br>Increased harmonic noise |

Other factors that may influence the selection of switching frequency and total inductance L_tot may be for example supply voltage level, battery voltage level, Battery SoC, Battery health, battery temperature, etc.

With reference again to figure 5A, which shows the current path during a first phase of the charging operating mode. If for example high inductance is desired in this specific charging occasion and the control system 21, based on obtained angular position of the rotor of the second electrical machine 5b detected by an associated angular position sensor or the like, determines that the third stator winding 13c of the second electrical machine 5b is the highest inductance of the three inductances 13a, 13b, 13c of the second electrical machine 5b, the first switch 16a of the third switch leg 16 of the second inverter 9b may be set in closed state, i.e. conductive state, for routing the charging current through the third stator winding 13c of the second electrical machine 5b during the first phase, which is associated with energy charging of Buck inductance. All other switches of the first and second inverters 9a, 9b may be set in open state, i.e. non-conductive state.

Moreover, the first bidirectional switching arrangement 30 is set in conductive state by setting the second switch 57 of the first bidirectional switching arrangement 30 in closed state, and the second bidirectional switching arrangement 31 is set in non-conductive state. As a result, during the first phase, which corresponds to charging of the buck inductance, a DC charging current supplied by the AC/DC converter 20 is routed through the following components: the second switch 57 of the first bidirectional switching arrangement 30, the intrinsic or extrinsic reverse diode of the first switch 56 of the first bidirectional switching arrangement 30, all windings 8 of the first electrical machine 5a and the associated intrinsic or extrinsic reverse diodes of the first switches 10a-12a of the first, second and third switch legs 10-12 of the first inverter 9a, the first switch 16a of the third switch leg of the second inverter 9b, the third stator winding 13c of the second electrical machine 5b, and back to the AC/DC converter 20.

The charging current through the first, second and third windings 8a, 8b, 8c of the first electrical machine 5a will depend on the momentary inductance of said windings.

With reference again to figure 5B, which shows the current path during the second phase of the charging operating mode. In this phase, all switches of the first and second inverters 9a, 9b may be set in open state. Moreover, the first bidirectional switching arrangement 30 is set in non-conductive state, and the second bidirectional switching arrangement 31 is set in conductive state by setting the second switch 59 of the second bidirectional switching arrangement 31 in closed state.

As a result, the energy stored in the stator windings in the form of a magnetic field is released and drives a charging current in a closed path, which current has the same direction as the charging current during the first phase. In detail, this charging current is routed through the following components: the electrical storage system 6, the intrinsic or extrinsic reverse diode of the second switch 16b of the third switch leg of the second inverter 9b, the third stator winding 13c of the second electrical machine 5b, the second switch 59 of the second bidirectional switching arrangement 31, the intrinsic or extrinsic reverse diode of the first switch 58 of the second bidirectional switching arrangement 31, all windings 8 of the first electrical machine 5a and the associated intrinsic or extrinsic reverse diodes of the first switches 10a-12a of the first, second and third switch legs 10-12 of the first inverter 9a, and back to the electrical storage system 6.

Clearly, if another level of inductance is desired, the control system 21 may, based on obtained angular position of the rotor of the second electrical machine 5b detected by an associated angular position sensor or the like, determine another combination of stator windings 13 of the second electrical machine 5b to be used, and controlling the associated first switches 14a-16a of the second inverter 9b accordingly.

In figures 5A and 5B the switches set in closed (conductive) state are marked with a circle.

The DC current passing through some or all of the stator winding of the first and second electrical machines 5a, 5b does not induce any substantial rotational torque of the rotors, except possibly some initial minor angular motion for adjusting the rotor to the DC charging currents of the selected winding(s), and/or minor vibration or the like due to current ripples. However, these types of minor initial angular motion and/or vibration may generally be eliminated by braking of the rotors or associated wheels during charging operating mode and vehicle to grid operating mode. Braking may for example be accomplished with the conventional friction brakes associated with the wheels of the vehicle.

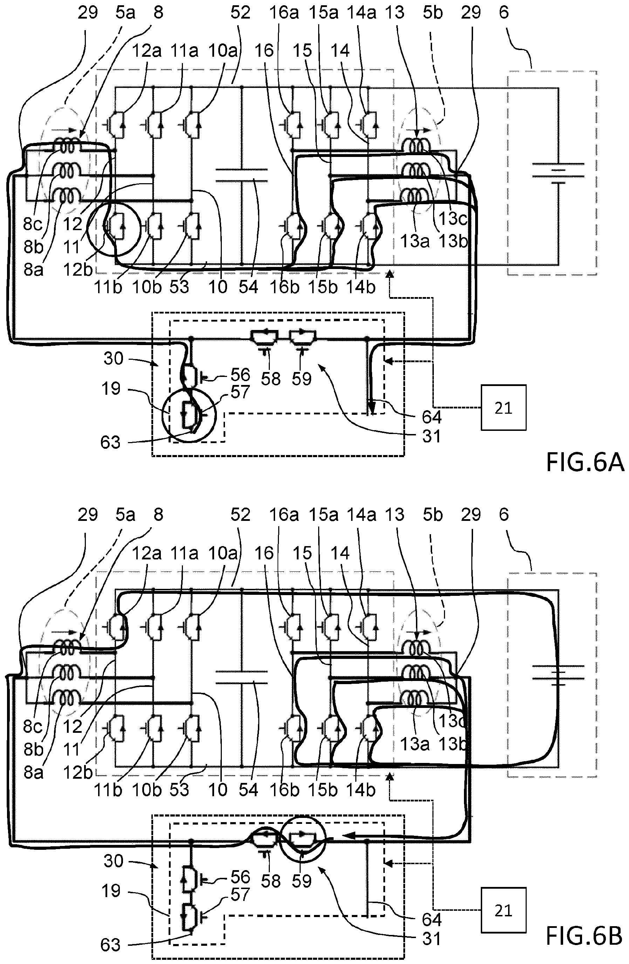

Figures 6A and 6B shows a second example embodiment of the current path during the said alternating on and off periods during charging of the electrical storage system 6.

If for example high inductance is desired in this specific charging occasion and the control system 21, based on obtained angular position of the rotor of the first electrical machine 5a as detected by an associated angular position sensor or the like, determines that the third stator winding 8c of the first electrical machine 51 has the highest inductance of the three inductances 8a, 8b, 8c of the first electrical machine 5a, and possibly larger than any of the inductances of the windings 13 of the second electrical machine 5b, the second switch 12b of the third switch leg 12 of the first inverter 91 may be set in closed state, i.e. conductive state, for routing the charging current through the third stator winding 8c of the first electrical machine 5a during the first phase. All other switches of the first and second inverters 9a, 9b may be set in open state, i.e. non-conductive state.

Moreover, the first bidirectional switching arrangement 30 is set in conductive state by setting the second switch 57 of the first bidirectional switching arrangement 30 in closed (conductive) state, and the second bidirectional switching arrangement 31 is set in non-conductive state. As a result, during the first phase, which corresponds to charging of the buck inductance (stator windings), a DC charging current supplied by the AC/DC converter 20 is routed through the following components: the second switch 57 of the first bidirectional switching arrangement 30, the intrinsic or extrinsic reverse diode of the first switch 56 of the first bidirectional switching arrangement 30, the third stator winding 8c of the first electrical machine 5a, the second switch 12b of the third switch leg 12 of the first inverter 9a, the intrinsic or extrinsic reverse diodes of the second switches 14b-16b of the first, second and third switch legs 14-16 of the second inverter 9b, all windings 13 of the second electrical machine 5b and back to the AC/DC converter 20.

With reference to figure 6B, which shows the current path during the second phase of the charging operating mode. In the second phase, all switches of the first and second inverters 9a, 9b may be set in open state. Moreover, the first bidirectional switching arrangement 30 is set in non-conductive state, and the second bidirectional switching arrangement 31 is set in conductive state by setting the second switch 59 of the second bidirectional switching arrangement 31 in closed state.

As a result, the energy stored in the stator windings 8c, 13a, 13b, 13c in the form of a magnetic field is released and drives a charging current in a closed path, which current has the same direction as the charging current during the first phase. In detail, this charging current is routed through the following components: the electrical storage system 6, the associated intrinsic or extrinsic reverse diodes of the second switches 14b-16b of the first, second and third switch legs 14-16 of the second inverter 9b, all windings 13 of the second electrical machine 5b, the second switch 59 of the second bidirectional switching arrangement 31, the intrinsic or extrinsic reverse diode of the first switch 58 of the second bidirectional switching arrangement 31, the third stator winding 8c of the first electrical machine 5a, the intrinsic or extrinsic reverse diode of the first switch 12a of the third switch leg 12 of the first inverter 9a, and back to the electrical storage system 6.

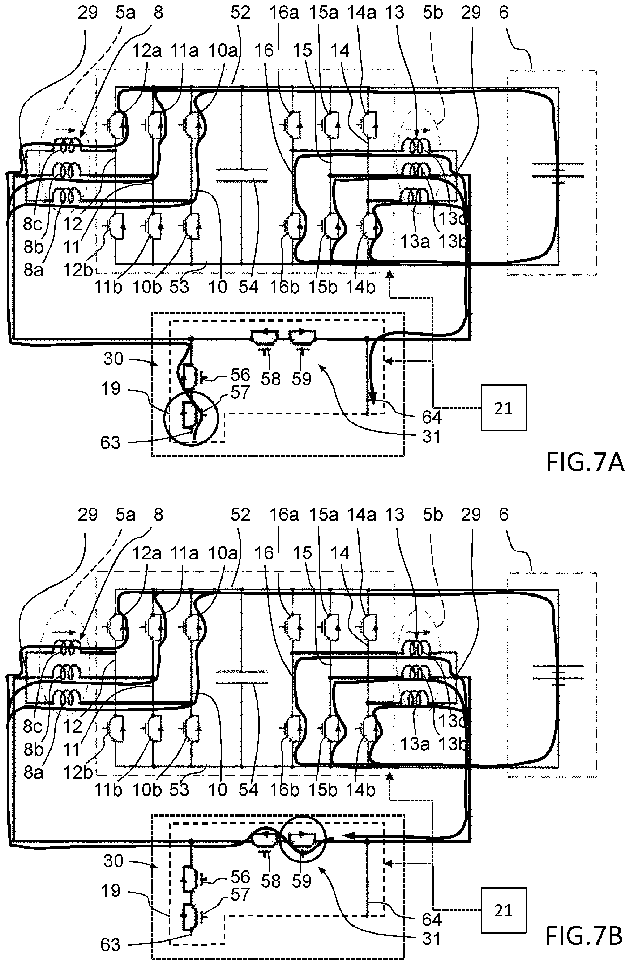

Still more alternatively, if maybe the highest possible buck inductance is not necessary, but other aspects are deemed more relevant, such as for example eliminating the need for operating of the switches of the first and second inverters 9a, 9b during charging, the following charging strategy, described with reference to figures 7A and 7B, may be selected.

Here, all switches of the first and second inverters 9a, 9b may be set in open state, i.e. non-conductive state, during both the first and second phase.

Moreover, during the first phase, the first bidirectional switching arrangement 30 is set in conductive state by setting the second switch 57 of the first bidirectional switching arrangement 30 in closed (conductive) state, and the second bidirectional switching arrangement 31 is set in non-conductive state. As a result, during the first phase, which corresponds to charging of the buck inductance (stator windings), a DC charging current supplied by the AC/DC converter 20 is routed through the following components, as illustrated in figure 7A: the second switch 57 of the first bidirectional switching arrangement 30, the intrinsic or extrinsic reverse diode of the first switch 56 of the first bidirectional switching arrangement 30, all windings 8 of the first electrical machine 5a and the associated intrinsic or extrinsic reverse diodes of the first switches 10a-12a of the first, second and third switch legs 10-12 of the first inverter 9a, the electrical storage system 6, the intrinsic or extrinsic reverse diodes of the second switches 14b-16b of the first, second and third switch legs 14-16 of the second inverter 9b, all windings 13 of the second electrical machine 5b and back to the AC/DC converter 20.

With reference to figure 7B, which shows the current path during the second phase of the charging operating mode. In the second phase, the first bidirectional switching arrangement 30 is set in non-conductive state, and the second bidirectional switching arrangement 31 is set in conductive state by setting the second switch 59 of the second bidirectional switching arrangement 31 in closed state. As a result, the energy stored in the stator windings 8, 13 in the form of a magnetic field is released and drives a charging current in a closed path, which current has the same direction as the charging current during the first phase. In detail, this charging current is routed through the following components: the electrical storage system 6, the associated intrinsic or extrinsic reverse diodes of the second switches 14b-16b of the first, second and third switch legs 14-16 of the second inverter 9b, all windings 13 of the second electrical machine 5b, the second switch 59 of the second bidirectional switching arrangement 31, the intrinsic or extrinsic reverse diode of the first switch 58 of the second bidirectional switching arrangement 31, all windings 8 of the first electrical machine 5a and the associated intrinsic or extrinsic reverse diodes of the first switches 10a-12a of the first, second and third switch legs 10-12 of the first inverter 9a, and back to the electrical storage system 6.

Thereby, Buck converter operation and charging of the electrical storage system is accomplished without use of synchronised switching of the switches of the first and second inverters 9a, 9b, thereby possibly reducing losses and avoiding temperature increase of the associated with switching of the switches of the first and second inverters 9a, 9b. The switching frequency during buck charging is for example in the range of 1 kHz - 1 MHz.

In other words, the control system 21 may, during a vehicle charging operating mode, be configured for operating the DC/DC converter 19 in a voltage step-down mode involving control of each of the first and second bidirectional switching arrangements 30, 31 to have alternating on and off periods, such that during the first phase, which involves charging of energy of Buck inductance, when the first bidirectional switching arrangement 30 is on and the second bidirectional switching arrangement 31 is off, a current can flow from the first connection point 63 of the AC/DC converter 20, via the first bidirectional switching arrangement 30, one or more stator windings 8 of the first multiphase electrical machine 5a, the first inverter 9a, the second inverter 9b while bypassing the electrical storage system 6 or not, one or more stator windings 13 of the second multiphase electrical machine 5b, and back to the second connection point 64 of the AC/DC converter 20.

Furthermore, the control system 21 may, during a vehicle charging operating mode, be configured for operating the DC/DC converter 19 in a voltage step-down mode involving control of each of the first and second bidirectional switching arrangements 30, 31 to have alternating on and off periods, such that during the second phase, which involves discharge of energy of the Buck inductances, when the first bidirectional switching arrangement 30 is off and the second bidirectional switching arrangement 31 is on, a charging current can flow from a negative pole of the electrical storage system 6, via the second inverter 9b, one or more stator windings 13 of the second multiphase electrical machine 5b, the second bidirectional switching arrangement 31, one or more stator windings 8 of the first multiphase electrical machine 5a, the first inverter 9a, and back to a positive terminal of the electrical storage system 6.

In addition, the control system 21 is during the vehicle charging operating mode configured for operating the DC/DC converter and in a voltage step-down, which involves operating the first bidirectional switching arrangement 30 with a first set of alternating on and off periods, and operating the second bidirectional switching arrangement 31 with a second set of alternating on and off periods, which are arranged synchronized and inverted with respect to the first set of alternating on and off periods.

As described with reference to figures 3 and 5A - 7B, each of the first and second inverters 9a, 9b includes at least one inverter leg 10-12, 14-16 for each phase (winding) of the associated multiphase electrical machine, and each inverter leg 10-12, 14-16 includes a upper switch 10a-12a, 14a-16a associated with the positive DC rail 52 connected in series with a lower switch 10b-12b, 14b-16b associated with the negative DC rail 53.

Moreover, the control system 21 may be configured for, during said vehicle charging operating mode, setting all upper and lower switches of the first and second inverters 9a, 9b in an open, non-conducting, state during both the first and second phase. Alternatively, the control system 21 may be configured for, during said vehicle charging operating mode, setting all upper and lower switches of the first inverter 9a and all lower switches of the second inverter 9b in an open state during both the first and second phase, and setting one, two, three or more of the upper switches 14a-16a of the second inverter 9b in a closed state during the first phase, and setting all of the upper switches of the second inverter 9b in an open state during the second phase.

Still more alternatively, the control system 21 may be configured for, during said vehicle charging operating mode, setting all upper and lower switches of the second inverter 9b and all upper switches of the first inverter 9b in an open state during both the first and second phase, and setting one, two, three or more of the lower switches of the first inverter 9a in a closed state during the first phase, and setting all of the lower switches of the first inverter 9a in an open state during the second phase.

The vehicle electrical system according to the disclosure is also capable of operating in a vehicle to grid operating mode, meaning that electrical power is supplied from the electrical storage system 6 to an external electrical load 18 during vehicle stillstand. This is for example appropriate for balancing an electrical grid in case of sudden changes in demand, or the like.

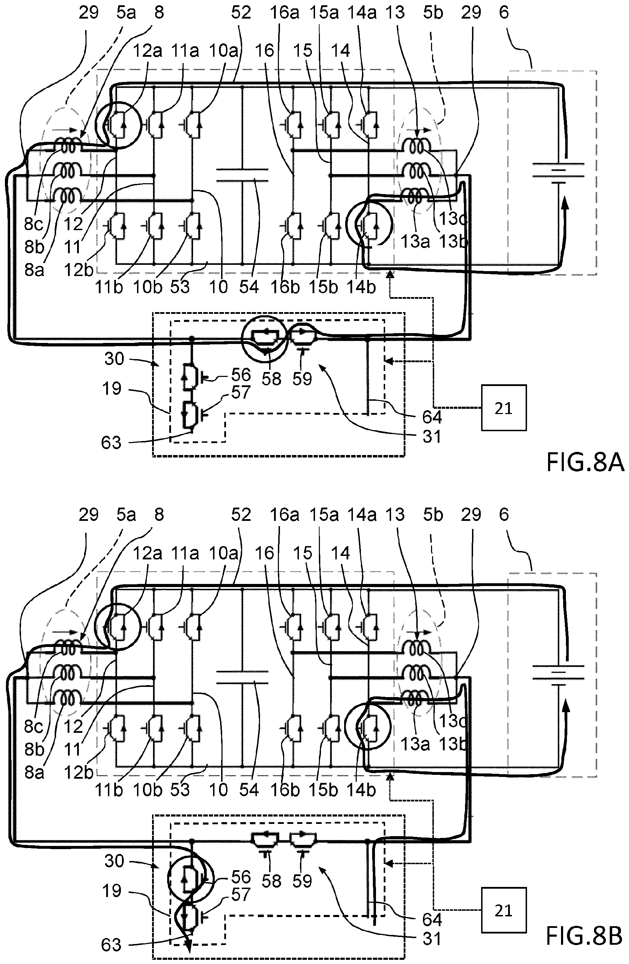

One example embodiment for controlling the vehicle electrical system during vehicle to grid operating mode is described below with reference to figures 8A and 8B.

Specifically, in vehicle to grid operating mode, the DC/DC converter is configured for operating in a boost mode, if the voltage level provided by the electrical storage system is too low compared with required voltage level.

In the boost mode, the first and second bidirectional switching arrangements 30, 31 of the DC/DC converter 19 may operate with synchronized alternating on and off periods, as described above with reference to figure 4, wherein the first bidirectional switching arrangement 30 is on during a first phase (time period) t1, and subsequently off during a second phase (time period) t2. The ratio of t1 to t_tot is referred to the as the duty rate of the DC/DC converter and controls the voltage step-up level. The second bidirectional switching arrangement 31 may be operating substantially opposite to the first bidirectional switching arrangement 30, such that the second bidirectional switching arrangement 31 is off during the first phase (time period) t1 and subsequently on during the second phase (time period) t2.

As described above, a suitable boost inductance level of the stator windings and boost switching frequency may first be selected. Thereafter, the inductance level of the various stator windings 8, 13 of the first and second electrical machines 9a, 9b may be determined based on angular position detection of the associated rotors, and an appropriate combination of stator windings 8, 13 may be selected for the vehicle to grid operating mode by setting the corresponding switches 10a-12a, 14b-16b in open or closed more.

If for example high inductance is desired during a specific vehicle to grid operating occasion and the control system 21, based on obtained angular position of the rotor of the first and second electrical machines 5a, 5b as detected by an associated angular position sensor or the like, determines that the third stator winding 8c of the first electrical machine 5a has the highest inductance of the three inductances 8a, 8b, 8c of the first electrical machine 5a, and that the first stator winding 13a of the second electrical machine 5b has the highest inductance of the three inductances 13a, 13b, 13c of the second electrical machine 5b, the control system may select to use these to stator windings 8c, 13a for providing the desired boost inductance.

Consequently, during the following first and second phases of the vehicle to grid operation, the first switch 12a of the third switch leg 12 of the first inverter 9a is set in closed state, i.e. conductive state, and the second switch 14b of the first switch leg 14 of the second inverter 9b is set in closed state, i.e. conductive state, thereby enabling routing the vehicle to grid discharge current through the third stator winding 8c of the first electrical machine 5a and through the first winding 13a of the second electrical machine 9b. All other switches of the first and second inverters 9a, 9b may be set in open state, i.e. non-conductive state during the first and second phases.

With reference to figure 8A, during the first phase, the second bidirectional switching arrangement 31 is set in conductive state by setting the first switch 58 of the second bidirectional switching arrangement 31 in closed (conductive) state, and the first bidirectional switching arrangement 30 is set in non-conductive state. As a result, during the first phase, which corresponds to charging of the boost inductance (stator windings), a DC discharge current supplied by electrical storage system 6 is routed through the following components: the first switch 12a of the third switch leg 12 of the first inverter 9a, the third stator winding 8c of the first electrical machine 5a, the first switch 58 of the second bidirectional switching arrangement 31, the intrinsic or extrinsic reverse diode of the second switch 59 of the second bidirectional switching arrangement 31, the first winding 13a of the second electrical machine 5b, the second switch 14b of the first switch leg 14 of the second inverter 9b, and back to the electrical storage system 6.

With reference to figure 8B, which shows the current path during the second phase of the vehicle to grid operating mode, the switches of the first and second inverters 9a, 9b remain the same as during the first phase, but the second bidirectional switching arrangement 31 is set in non-conductive state, and the first bidirectional switching arrangement 30 is set in conductive state by setting the first switch 56 of the first bidirectional switching arrangement 30 in the closed state.

As a result, the energy stored in the stator windings 8c, 13a in the form of a magnetic field is released and drives a vehicle to grid current, which has the same direction as the discharge current during the first phase. In detail, this vehicle to grid current is routed, from the external electrical load 18 via the AC/DC converter, through the following components: the first winding 13a of the second electrical machine 5b, the second switch 14b of the first switch leg 14 of the second inverter 9b, the electrical storage system 6, the first switch 12a of the third switch leg 12 of the first inverter 9a, the third stator winding 8c of the first electrical machine 5a, the first switch 56 of the first bidirectional switching arrangement 30, the intrinsic or extrinsic reverse diode of the second switch 57 of the first bidirectional switching arrangement 30.

Clearly, if another level of boost inductance is desired, another combination of stator windings 8,13 may be selected by appropriate control of the switches of the first and second electrical machines 9a, 9b.

In other words, the control system 21 is during the vehicle to grid operating mode configured for operating the DC/DC converter in a voltage step-up involving control of each of the first and second bidirectional switching arrangements 30, 31 to have alternating on and off periods, such that during a first phase, when the first bidirectional switching arrangement 30 is off and the second bidirectional switching arrangement 31 is on, a current can flow from a positive pole of the electrical storage system 6, the first inverter 9a, one or more stator windings 8 of the first multiphase electrical machine 5a, the second bidirectional switching arrangement 31, one or more stator windings 13 of the second multiphase electrical machine 5b, the second inverter 9b, and back to a negative terminal of the electrical storage system 6.

In addition, the control system 21 is configured such that during the second phase, when the first bidirectional switching arrangement 30 is on and the second bidirectional switching arrangement 31 is off, a current can flow from the second connection point 64 of the AC/DC converter 20, via one or more stator windings 13 of the second multiphase electrical machine 5b, the second inverter 9b, the electrical storage system 6, the first inverter 9a, one or more stator windings 8 of the first multiphase electrical machine 5a, the first bidirectional switching arrangement 30 and back to the first connection point 63 of the AC/DC converter 20.

Furthermore, each of the first and second inverters 9a, 9b includes at least one inverter leg 10-12, 14-16 for each phase 8, 13 of the associated multiphase electrical machine 5a, 5b, and each inverter leg 10-12, 14-16 includes an upper switch 10a-12a, 14a-16a associated with a positive DC rail 52 connected in series with a lower switch 10b-12b, 14b-16b associated with a negative DC rail 53, and the control system 21 is configured for, during said vehicle to grid operating mode, setting one, two, three or more of the upper switches 10a-12a of the first inverter 9a in a closed state during both the first and second phase, setting one, two, three or more of the lower switches 14b-16b of the second inverter 9b in a closed state during both the first and second phase, and setting all the lower switches 10b-12b of the first inverter 9a and all the upper switches 14a-16a of the second inverter 9b in an open state during both the first and second phase.

As described above, the control system 21 may according to some example embodiments be configured for, during vehicle to grid operating mode and/or vehicle charging operating mode, controlling the switches 10a-12b, 14a-16b of the first and/or second inverter 9a, 9b based on the angular position of the rotor of the first and/or second multiphase electrical machine 5a, 5b.

In addition, according to some example embodiments, the control system 21 is configured for, during vehicle to grid operating mode, selecting which of the one or more upper switches 10a-12a of the first inverter 9a and which of the one or more lower switches 14b-16b of the second inverter 9b should be set in a closed state during the first and second phase, based on the angular position of the rotor of the first and/or second multiphase electrical machine 5a, 5b.

In addition, according to some example embodiments, the control system 21 is configured for, during vehicle charging operating mode, selecting which of the one or more upper switches 14a-16a of the second inverter 9b should be set in a closed state during the first phase, or which of the one or more lower switches 10b-12b of the first inverter 9a should be set in the closed state during the first phase, based on the angular position of the rotor of the first and/or second multiphase electrical machine 5a, 5b.

According to some example embodiments, the control system 21 is configured for, during vehicle to grid operating mode, selecting which of the one or more upper switches 10a-12a of the first inverter 9a and which of the one or more lower switches 14b-16b of the second inverter 9a should be set in a closed state during the first and second phase, based on an estimated or calculated maximal current of the switches of the first and/or second inverter 9a, 9b.

Similarly, according to some example embodiments, the control system 21 is configured for, during vehicle charging operating mode, selecting which of the one or more upper switches 14a-16a of the second inverter 9b in a closed state during the first phase, or which of the one or more lower switches 10b-12b of the first inverter 9a should be set in the closed state during the first phase, based on an estimated or calculated maximal current of the switches of the first and/or second inverter 9a, 9b.

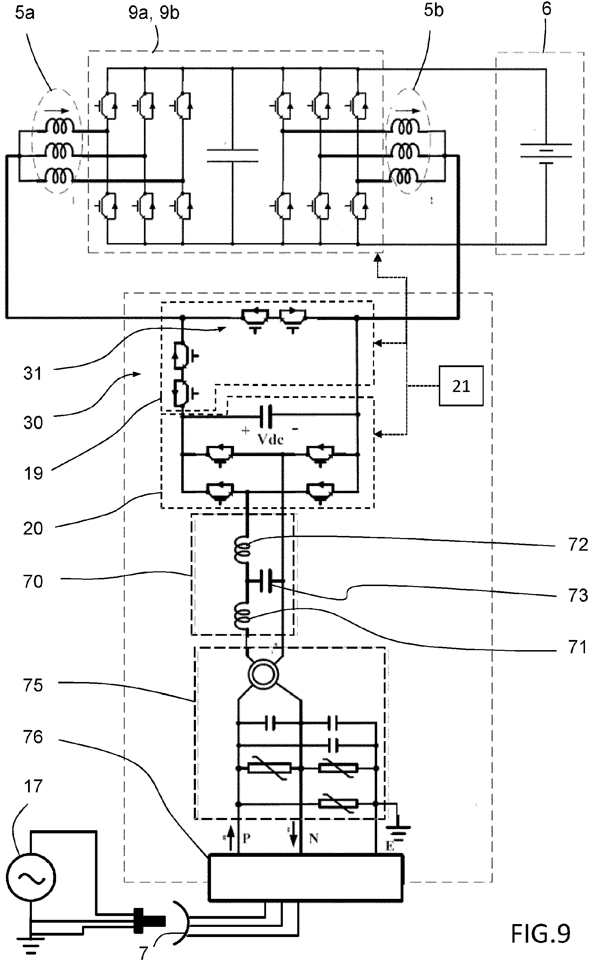

Figure 9 shows the same vehicle electrical system as described above with reference to figures 1 to 8B, but here with some additional electrical filter arrangements provided as interface between the AC/DC converter 20 and the charging terminal 7. In particular, a LCL filter arrangement 70 having, in the single-phase line, a grid side inductor 71 connected in series with converter side inductor 72, and with a capacitor 73 connected between the grid side inductor 71 and converter side inductor 72 and to neutral line. Moreover, a further filter arrangement 75 with EMC protection with common mode filter may be arranged in series with the LCL filter arrangement 70. Both the EMC filter arrangement 75 and the LCL filter arrangement 70 are preferably arranged on the grid front end circuit board 55 having a connection interface 76 for electrical connecting with the charging terminal 7.

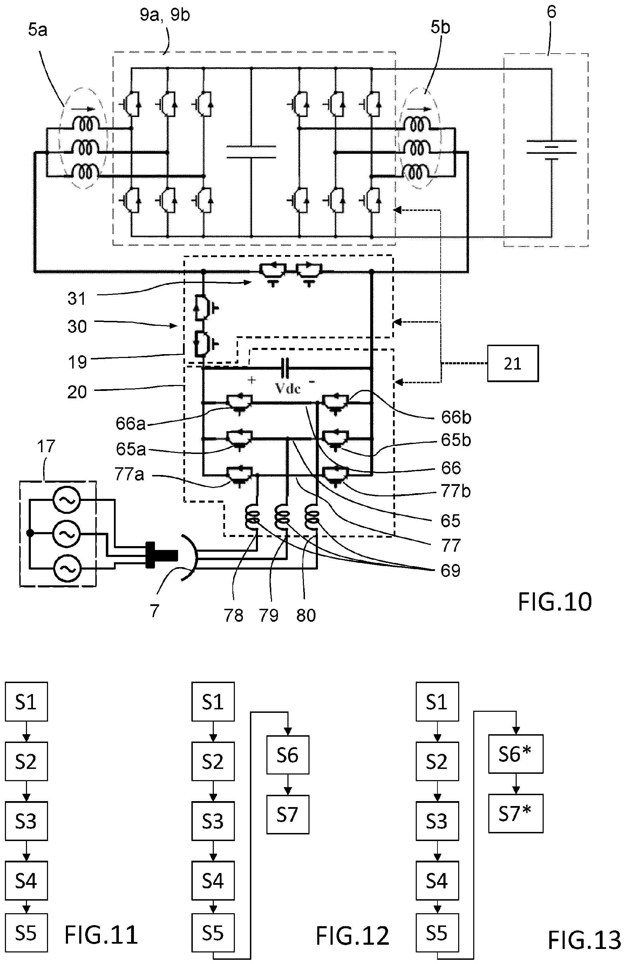

Figure 10 schematically illustrates a version of the vehicle electrical system adapted for being charged with three-phase AC during vehicle charging, and for supply of three-phase AC during vehicle to grid operation. The vehicle electrical system of figure 10 is identical in structure and function with the system described above with reference to figures 1-8B, and differs merely in that the AC/DC converter is provided with an additional switch leg 77.

In other words, the AC/DC converter 20 is here a three-phase active front-end rectifier including a plurality of switch legs 65, 66, 77 connected between a positive rail associated with the first connection point 63 of the AC/DC converter 20 and a negative rail associated with the second connection point 64 of the AC/DC converter 20, wherein each switch leg 65, 66, 77 has at least two switches 65a, 65b, 66a, 66b, 77a, 77b connected in series via an intermediate conductor. The grid side of the AC/DC converter 20 includes three connection points 78-80 electrically connected to the charging terminal 7 for receiving three-phase AC from a three-phase vehicle external charging source 17, or outputting three-phase AC to a vehicle external electrical load, wherein each of said three connection points 78-80 is electrically connected to a separate intermediate conductor of the plurality of switch legs 65, 66, 77, and wherein each phase line includes an inductor element 69 between the associated connection point 78-80 and switch leg 65, 66, 77.

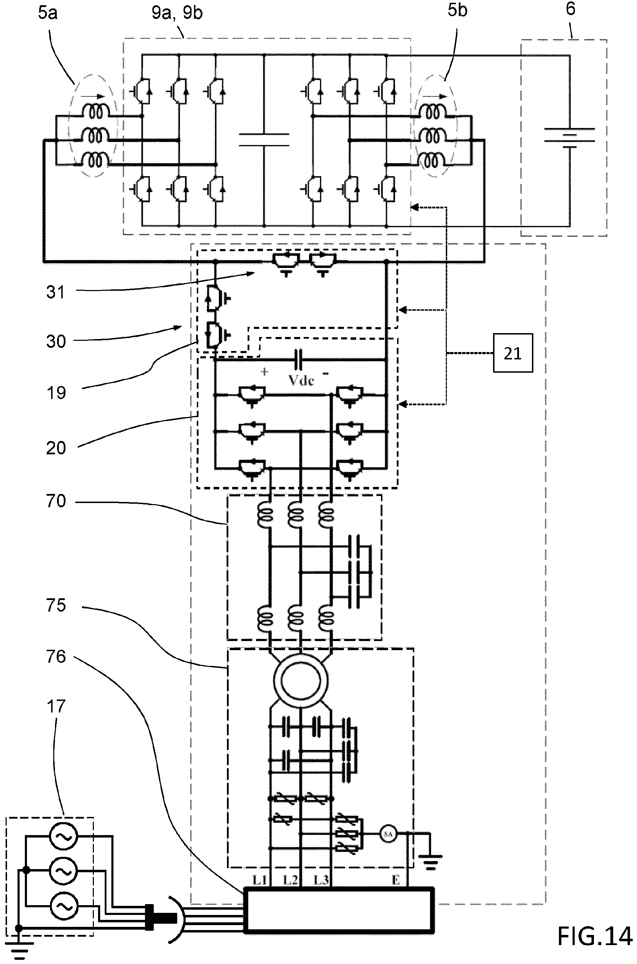

Figure 14 shows the same vehicle electrical system as described above with reference to figure 10, but here with some additional three-phase electrical filter arrangements provided as interface between the AC/DC converter 20 and the charging terminal 7. In particular, a LCL filter arrangement 70 having, in each phase line, a grid side inductor connected in series with converter side inductor, and with a capacitor connected between the grid side inductor 71 and converter side inductor 72 and to neutral point. Moreover, a further filter arrangement 75 with EMC protection and with common mode filter may be arranged in series with the LCL filter arrangement 70. Both the EMC filter arrangement 75 and the LCL filter arrangement 70 are preferably arranged on the grid front end circuit board 55 having a connection interface 76 for electrical connecting with the charging terminal 7.

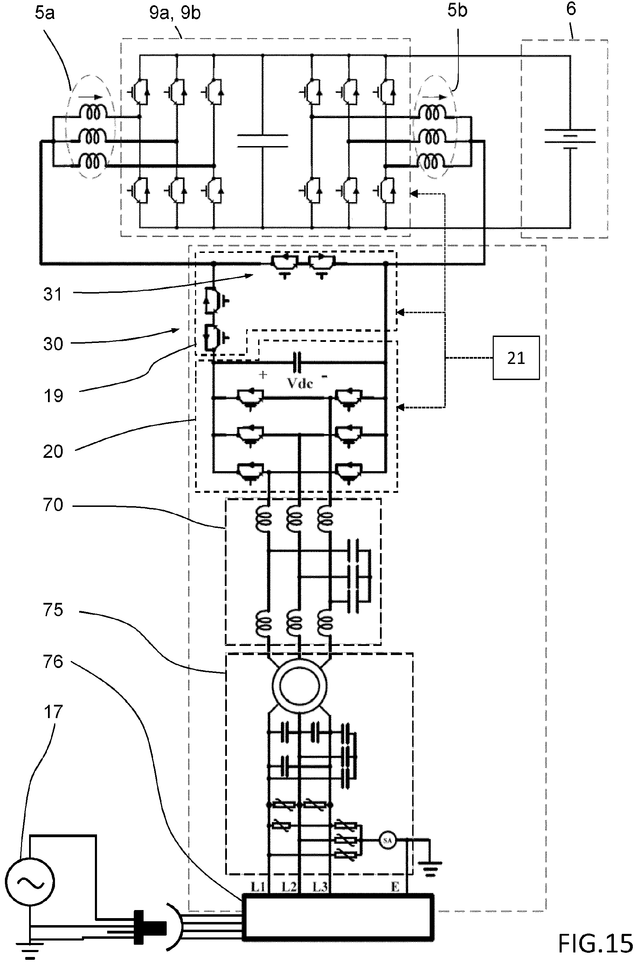

Figure 15 shows an interesting and advantageous aspect of the vehicle electrical system according to the disclosure, namely that a multi-phase arrangement of the vehicle electrical system may be connected to a single-phase external load 17 without requiring any changes of the hardware setup of the vehicle electrical system. In other words, not only is the vehicle electrical system according to the disclosure capable of being connected to a large range of different AC voltage levels, but also to be connected to different number of phases, all without hardware changes.

The invention also relates to a vehicle including a vehicle electrical system as described above with reference to figures 1-10 and 14-15, or to the appended claims.

The disclosure also relates to a method for charging an electrical storage system 6 of a vehicle electrical system. The main steps of the method will be described below with reference to figure 11. The method comprises a first step S1 of connecting a first inverter 9a to the electrical storage system 6 and to a first multiphase electrical machine 5a having a plurality of stator windings 8 connected to common neutral point, wherein the first inverter 9a has a plurality of switch legs 10, 11, 12 with switches 10a, 10b, 11a, 11b, 12a, 12b. The method further comprises a second step S2 of connecting a second inverter 9b to the electrical storage system 6 and to a second multiphase electrical machine 5b having a plurality of stator windings 13 connected to common neutral point, wherein the second inverter 9b has a plurality of switch legs 14, 15, 16 with switches 14a, 14b. Moreover, the method comprises a third step S3 of connecting a bidirectional buck-boost DC/DC converter to the common neutral point of the first multiphase electrical machine 5a and to the common neutral point of the second multiphase electrical machine 5b for using at least one stator winding of each of the first and second multiphase electrical machines 5a, 5b as buck-boost inductance. Furthermore, the method comprises a fourth step S4 of connecting a bidirectional AC/DC converter to the DC/DC converter and to a charging terminal 7 with or without an intermediate electrical filter arrangement. Finally, the method comprises a fifth step S5 of providing an electronic control system 21 for controlling operation of the vehicle electrical system.

Clearly, the internal order of steps S1-S5 described above may be changed to include all possible combinations, i.e. 5! (120 combinations), considering that all steps merely relate to providing various features and no step rely on for example a result of calculation of another step.

According to further example embodiment of the disclosure, the method may include some additional steps as described with reference to figure 12. Specifically, the method for charging the electrical storage system 6 may, in addition to steps S1-S5 described above, include steps S6 and S7, which relates to details of the method for operating the vehicle electrical system in a vehicle charging operating mode. The sixth method step S6 involves providing the DC/DC converter with a first bidirectional switching arrangement 30 configured for selectively opening and closing an electrical connection between a first connection point of the AC/DC converter and the common neutral point of the first multiphase electrical machines 5a, and a second bidirectional switching arrangement 31 configured for selectively opening and closing an electrical connection between the common neutral points of the first and second multiphase electrical machines 5a, 5b.

Furthermore, the seventh method step S7 involves controlling each of the first and second bidirectional switching arrangements 30, 31 to have alternating on and off periods for accomplishing a voltage step-down during a vehicle charging operating mode. During a first phase, when the first bidirectional switching arrangement 30 is on and the second bidirectional switching arrangement 31 is off, a current flows from the first connection point of the AC/DC converter, via the first bidirectional switching arrangement 30, one or more stator windings of the first multiphase electrical machine 5a, the first inverter 9a, the second inverter 9b while bypassing the electrical storage system 6 or not, one or more stator windings of the second multiphase electrical machine 5b, and back to the second connection point of the AC/DC converter.

Moreover, during a second phase, when the first bidirectional switching arrangement 30 is off and the second bidirectional switching arrangement 31 is on, a charging current flows from a negative pole of the electrical storage system 6, via the second inverter 9b, one or more stator windings of the second multiphase electrical machine 5b, the second bidirectional switching arrangement 31, one or more stator windings of the first multiphase electrical machine 5a, the first inverter 9a, and back to a positive terminal of the electrical storage system 6.

Clearly, as described above, the internal order of steps S1-S6 described above may be changed to include all possible combinations, considering that said steps merely relate to providing various features and no step rely on for example a result of calculation of another step. However, the seventh step S7 must be located at the end of the method.

According to further example embodiment of the disclosure, the method may include some additional steps as described with reference to figure 13. Specifically, the method for charging the electrical storage system 6 may, in addition to steps S1-S5 described above, include steps S6* and S7*, which relates to details of the method for operating the vehicle electrical system in a vehicle to grid operating mode. The sixth method step S6* involves providing the DC/DC converter with a first bidirectional switching arrangement 30 configured for selectively opening and closing an electrical connection between a first connection point of the AC/DC converter and the common neutral point of the first multiphase electrical machines 5a, and a second bidirectional switching arrangement 31 configured for selectively opening and closing an electrical connection between the common neutral points of the first and second multiphase electrical machines 5a, 5b.

Furthermore, the seventh step S7* involves controlling each of the first and second bidirectional switching arrangements 30, 31 to have alternating on and off periods for accomplishing a voltage step-up during a vehicle to grid operating mode. During a first phase, when the first bidirectional switching arrangement 30 is off and the second bidirectional switching arrangement 31 is on, a discharge current flows from a positive pole of the electrical storage system 6, the first inverter 9a, one or more stator windings of the first multiphase electrical machine 5a, the second bidirectional switching arrangement 31, one or more stator windings of the second multiphase electrical machine 5b, the second inverter 9b, and back to a negative terminal of the electrical storage system 6. Moreover, during a second phase, when the first bidirectional switching arrangement 30 is on and the second bidirectional switching arrangement 31 is off, a discharge current flows from the second connection point of the AC/DC converter, via one or more stator windings of the second multiphase electrical machine 5b, the second inverter 9b, the electrical storage system 6, the first inverter 9a, one or more stator windings of the first multiphase electrical machine 5a, the first bidirectional switching arrangement 30 and back to the first connection point of the AC/DC converter.

Clearly, as described above, the internal order of steps S1-S6 described above may be changed to include all possible combinations, considering that said steps merely relate to providing various features and no step rely on for example a result of calculation of another step. However, the seventh step S7* must be located at the end of the method.

The term switch, or electronic power switch, herein refers to for example a power transistor or a semiconductor switch, such as MOSFET, IGBT, etc. The switches are provided in the first and second inverters 9a, 9b for controlling torque and/or speed of the first and second multiphase electrical machine, and in the AC/DC and DC/DC converters 20, 19 for controlling the charging voltage level.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

**Claims**

1. A vehicle electrical system comprising:

   an electrical storage system (6),
   a first multiphase electrical machine (5a) having a plurality of stator windings (8) connected in star connection to a common neutral point of the first multiphase electrical machine (5a),
   a first inverter (9a) operatively connected to the electrical storage system (6) and to the first multiphase electrical machine (5a), wherein the first inverter (9a) has a plurality of switch legs (10, 11, 12) with switches (10a, 10b, 11a, 11b, 12a, 12b),
   a second multiphase electrical machine (5b) having a plurality of stator windings (13) connected in star connection to a common neutral point of the second multiphase electrical machine (5b),
   a second inverter (9b) operatively connected to the electrical storage system (6) and to the second multiphase electrical machine (5b), wherein the second inverter (9b) has a plurality of switch legs (14, 15, 16) with switches (14a, 14b),
   **characterised in that** the vehicle electrical system further comprises a bidirectional buck-boost DC/DC converter operatively connected to the common neutral point of the first multiphase electrical machine (5a) and to the common neutral point of the second multiphase electrical machine (5b) and configured for using at least one stator winding of each of the first and second multiphase electrical machines (5a, 5b) as buck-boost inductance,
   a bidirectional AC/DC converter operatively connected to the DC/DC converter and to a charging terminal (7) with or without an intermediate electrical filter arrangement, and
   an electronic control system (21) for controlling operation of the vehicle electrical system.

2. The vehicle electrical system according to claim 1, wherein the electronic control system (21) is operatively coupled to the bidirectional DC/DC converter and to the first and second inverters (9a, 9b) and configured for:

- during a vehicle charging operating mode, controlling operation of the DC/DC converter and first and/or second inverters for converting DC supplied from the AC/DC converter to modified DC and for supplying said modified DC to the electrical storage system (6) via the common neutral points of the first and second multiphase electrical machines (5a, 5b), and
- during a vehicle to grid operating mode, controlling operation of the first and/or second inverters and DC/DC converter for supplying DC from the electrical storage system (6) to the DC/DC converter via the common neutral points of the first and second multiphase electrical machines (5a, 5b), and for converting said DC to a modified DC, for supply to said AC/DC converter.

3. The vehicle electrical system according to any of the preceding claims, wherein the electronic control system (21) is operatively coupled to the bidirectional AC/DC converter and configured for:

- during a vehicle charging operating mode, controlling operation of the AC/DC converter for converting single-phase AC or multi-phase AC received from a vehicle external charging source (17) via the charging terminal (7) to DC, for supply of DC to said DC/DC converter, and
- during a vehicle to grid operating mode, controlling operation of the AC/DC converter for converting DC received from said DC/DC converter to single-phase AC or multi-phase AC, for supply of said AC to a vehicle external electrical load (18) via the charging terminal (7).

4. The vehicle electrical system according to any of the preceding claims, wherein the AC/DC converter has a grid side with two or three connection points for receiving and outputting single-phase or three-phase AC, and a motor side with first and second connection points for receiving and outputting DC, and wherein the DC/DC converter comprises a first bidirectional switching arrangement (30) configured for selectively opening and closing an electrical connection between the first connection point of the AC/DC converter and the common neutral point of the first multiphase electrical machines (5a), and a second bidirectional switching arrangement (31) configured for selectively opening and closing an electrical connection between the common neutral points of the first and second multiphase electrical machines (5a, 5b).

5. The vehicle electrical system according to any of the preceding claims, wherein the control system (21), during a vehicle charging operating mode, is configured for operating the DC/DC converter in a voltage step-down involving control of each of the first and second bidirectional switching arrangements (30, 31) to have alternating on and off periods,

such that during a first phase when the first bidirectional switching arrangement (30) is on and the second bidirectional switching arrangement (31) is off, a current can flow from the first connection point of the AC/DC converter, via the first bidirectional switching arrangement (30), one or more stator windings of the first multiphase electrical machine (5a), the first inverter (9a), the second inverter (9b) while bypassing the electrical storage system (6) or not, one or more stator windings of the second multiphase electrical machine (5b), and back to the second connection point of the AC/DC converter, and

such that during a second phase] when the first bidirectional switching arrangement (30) is off and the second bidirectional switching arrangement (31) is on, a charging current can flow from a negative pole of the electrical storage system (6), via the second inverter (9b), one or more stator windings of the second multiphase electrical machine (5b), the second bidirectional switching arrangement (31), one or more stator windings of the first multiphase electrical machine (5a), the first inverter (9a), and back to a positive terminal of the electrical storage system (6).

6. The vehicle electrical system according to any of the preceding claims, wherein the control system (21), during a vehicle charging operating mode, is configured for operating the first bidirectional switching arrangement (30) with a first set of alternating on and off periods, and operating the second bidirectional switching arrangement (31) with a second set of alternating on and off periods, which are arranged more or less synchronized and inverted to the first set of alternating on and off periods,

7. The vehicle electrical system according to any of the preceding claims, wherein each of the first and second inverters (9a, 9b) includes at least one inverter leg for each phase of the associated multiphase electrical machine, and wherein each inverter leg includes a upper switch associated with a positive DC rail connected in series with a lower switch associated with a negative DC rail, wherein the control system (21) is configured for, during said vehicle charging operating mode,

setting all upper and lower switches of the first and second inverters (9a, 9b) in an open state during both the first and second phase, or

setting all upper and lower switches of the first inverter (9a) and all lower switches of the second inverter (9b) in an open state during both the first and second phase, and setting one, two, three or more of the upper switches of the second inverter (9b) in a closed state during the first phase, and setting all of the upper switches of the second inverter (9b) in an open state during the second phase, or

setting all upper and lower switches of the second inverter (9b) and all upper switches of the first inverter (9b) in an open state during both the first and second phase, and setting one, two, three or more of the lower switches of the first inverter (9a) in a closed state during the first phase, and setting all of the lower switches of the first inverter (9a) in an open state during the second phase.

8. The vehicle electrical system according to any of the preceding claims, wherein the electrical connection extending from the common neutral point of the first multiphase electrical machine (5a) to the common neutral point of the second multiphase electrical machine (5b) via the second bidirectional switching arrangement (31) is free from any substantial inductor.

9. The vehicle electrical system according to any of the preceding claims, wherein the vehicle electrical system is free from a DC/DC converter in an electrical power supply path extending between the electrical storage system (6) and any of the first and second inverter (9a, 9b).

10. The vehicle electrical system according to any of the preceding claims, wherein the AC/DC converter is a single-phase or three-phase active front-end rectifier including a plurality of switch legs connected between a positive rail and a negative rail of a DC link, wherein each switch leg has at least two switches connected in series via an intermediate conductor, wherein a grid side of the AC/DC converter includes two or three connection points electrically connected to the charging terminal (7) for receiving and outputting single-phase or three-phase AC to/from a vehicle external charging source (17) or vehicle external electrical load (18), wherein each of said two or three connections is electrically connected to a separate intermediate conductor of the plurality of switch legs.

11. The vehicle electrical system according to any of the preceding claims, wherein the control system (21), during a vehicle to grid operating mode, is configured for operating the DC/DC converter in a voltage step-up involving control of each of the first and second bidirectional switching arrangements (30, 31) to have alternating on and off periods,

such that during a first phase, when the first bidirectional switching arrangement (30) is off and the second bidirectional switching arrangement (31) is on, a current can flow from a positive pole of the electrical storage system (6), the first inverter (9a), one or more stator windings of the first multiphase electrical machine (5a), the second bidirectional switching arrangement (31), one or more stator windings of the second multiphase electrical machine (5b), the second inverter (9b), and back to a negative terminal of the electrical storage system (6), and

such that during a second phase, when the first bidirectional switching arrangement (30) is on and the second bidirectional switching arrangement (31) is off, a current can flow from the second connection point of the AC/DC converter, via one or more stator windings of the second multiphase electrical machine (5b), the second inverter (9b), the electrical storage system (6), the first inverter (9a), one or more stator windings of the first multiphase electrical machine (5a), the first bidirectional switching arrangement (30) and back to the first connection point of the AC/DC converter.

12. The vehicle electrical system according to any of the preceding claims, wherein each of the first and second inverters (9a, 9b) includes at least one inverter leg for each phase of the associated multiphase electrical machine, and wherein each inverter leg includes a upper switch associated with a positive DC rail connected in series with a lower switch associated with a negative DC rail, wherein the control system (21) is configured for, during said vehicle to grid operating mode, setting one, two, three or more of the upper switches of the first inverter (9a) in a closed state during both the first and second phase, setting one, two, three or more of the lower switches of the second inverter (9a) in a closed state during both the first and second phase, and setting all the lower switches of the first inverter (9a) and all the upper switches of the second inverter (9b) in an open state during both the first and second phase.

13. The vehicle electrical system according to any of the preceding claims, wherein the control system (21) is configured for, during a vehicle to grid operating mode or a vehicle charging operating mode, controlling the first and/or second inverter based on the angular position of the rotor of the first and/or second multiphase electrical machine (5a, 5b).

14. The vehicle electrical system according to any of the preceding claims, wherein the control system (21) is configured for,

during a vehicle to grid operating mode, selecting which of the one or more upper switches of the first inverter (9a) and which of the one or more lower switches of the second inverter (9a) should be set in a closed state during the first and second phase, based on the angular position of the rotor of the first and/or second multiphase electrical machine (5a, 5b), and/or

during a vehicle charging operating mode, selecting which of the one or more upper switches of the second inverter (9b) in a closed state during the first phase, or which of the one or more lower switches of the first inverter (9a) should be set in the closed state during the first phase, based on the angular position of the rotor of the first and/or second multiphase electrical machine (5a, 5b).

15. Method for charging an electrical storage system (6) of a vehicle electrical system, the method comprising:

connecting a first inverter (9a) to the electrical storage system (6) and to a first multiphase electrical machine (5a) having a plurality of stator windings (8) connected in star connection to a common neutral point of the first multiphase electrical machine (5a), wherein the first inverter (9a) has a plurality of switch legs (10, 11, 12) with switches (10a, 10b, 11a, 11b, 12a, 12b),

connecting a second inverter (9b) to the electrical storage system (6) and to a second multiphase electrical machine (5b) having a plurality of stator windings (13) connected in star connection to a common neutral point of the second multiphase electrical machine (5b), wherein the second inverter (9b) has a plurality of switch legs (14, 15, 16) with switches (14a, 14b),

**characterised in that** the method further comprises:

connecting a bidirectional buck-boost DC/DC converter to the common neutral point of the first multiphase electrical machine (5a) and to the common neutral point of the second multiphase electrical machine (5b) for using at least one stator winding of each of the first and second multiphase electrical machines (5a, 5b) as buck-boost inductance,

connecting a bidirectional AC/DC converter to the DC/DC converter and to a charging terminal (7) with or without an intermediate electrical filter arrangement, and

providing an electronic control system (21) for controlling operation of the vehicle electrical system,

wherein the first and second inverters (9a, 9b), the electrical storage system (6), the first and second multiphase electrical machines (5a, 5b), the bidirectional buck-boost DC/DC converter, the bidirectional AC/DC converter and the charging terminal (7) are parts of the vehicle electrical system.

**Patentansprüche**

1. Elektrisches Fahrzeugsystem, umfassend:

ein elektrisches Speichersystem (6),

eine erste mehrphasige elektrische Maschine (5a), die eine Vielzahl von Statorwicklungen (8) aufweist, die in einem Sternanschluss an einen gemeinsamen neutralen Punkt der ersten mehrphasigen elektrischen Maschine (5a) angeschlossen sind,

einen ersten Wechselrichter (9a), der funktionsbereit an das elektrische Speichersystem (6) und an die erste mehrphasige elektrische Maschine (5a) angeschlossen ist, wobei der erste Wechselrichter (9a) eine Vielzahl von Schalterbeinen (10, 11, 12) mit Schaltern (10a, 10b, 11a, 11b, 12a, 12b) aufweist,

eine zweite mehrphasige elektrische Maschine (5b), die eine Vielzahl von Statorwicklungen (13) aufweist, die in einem Sternanschluss an einen gemeinsamen neutralen Punkt der zweiten mehrphasigen elektrischen Maschine (5b) angeschlossen sind,

einen zweiten Wechselrichter (9b), der funktionsbereit an das elektrische Speichersystem (6) und an die zweite mehrphasige elektrische Maschine (5b) angeschlossen ist, wobei der zweite Wechselrichter (9b) eine Vielzahl von Schalterbeinen (14, 15, 16) mit Schaltern (14a, 14b) aufweist,

**dadurch gekennzeichnet, dass** das elektrische Fahrzeugsystem ferner Folgendes umfasst: einen bidirektionalen Gleichstrom/Gleichstrom-Auf-/Abwärtswandler (Buck-Boost-Wandler), der funktionsbereit an den gemeinsamen neutralen Punkt der ersten mehrphasigen elektrischen Maschine (5a) und an den gemeinsamen neutralen Punkt der zweiten mehrphasigen elektrischen Maschine (5b) angeschlossen ist und dazu konfiguriert ist, mindestens eine Statorwicklung jeder der ersten und der zweiten mehrphasigen elektrischen Maschine (5a, 5b) als Buck-Boost-Induktivität zu verwenden,
einen bidirektionalen Wechselstrom/Gleichstrom-Wandler, der funktionsbereit an den Gleichstrom/Gleichstrom-Wandler und an eine Ladestation (7) mit oder ohne eine dazwischenliegende Elektrofilteranordnung angeschlossen ist, und
ein elektronisches Steuerungssystem (21) zum Steuern des Betriebs des elektrischen Fahrzeugsystems.

2.  Elektrisches Fahrzeugsystem nach Anspruch 1, wobei das elektronische Steuerungssystem (21) funktionsbereit an den bidirektionalen Gleichstrom/Gleichstrom-Wandler sowie den ersten und den zweiten Wechselrichter (9a, 9b) gekoppelt ist und dazu konfiguriert ist,

- während eines Fahrzeuglade-Betriebsmodus den Betrieb des Gleichstrom/Gleichstrom-Wandlers und des ersten und/oder des zweiten Wechselrichters zum Umwandeln von Gleichstrom, der vom Wechselstrom/Gleichstrom-Wandler zugeleitet wird, in modifizierten Gleichstrom und zum Zuleiten des modifizierten Gleichstroms in das elektrische Speichersystem (6) über die gemeinsamen neutralen Punkte der ersten und der zweiten mehrphasigen elektrischen Maschine (5a, 5b) zu steuern und
- während eines Fahrzeug-ans-Netz-Betriebsmodus den Betrieb des ersten und/oder des zweiten Wechselrichters und des Gleichstrom/Gleichstrom-Wandlers zum Zuleiten von Gleichstrom aus dem elektrischen Speichersystem (6) zum Gleichstrom/Gleichstrom-Wandler über die gemeinsamen neutralen Punkte der ersten und der zweiten mehrphasigen elektrischen Maschine (5a, 5b) und zum Umwandeln des Gleichstroms in einen modifizierten Gleichstrom für die Zuleitung zum Wechselstrom/Gleichstrom-Wandler zu steuern.

3.  Elektrisches Fahrzeugsystem nach einem der vorhergehenden Ansprüche, wobei das elektronische Steuerungssystem (21) funktionsbereit an den bidirektionalen Wechselstrom/Gleichstrom-Wandler gekoppelt ist und dazu konfiguriert ist,

- während eines Fahrzeuglade-Betriebsmodus den Betrieb des Wechselstrom/Gleichstrom-Wandlers zum Umwandeln von einphasigem Wechselstrom oder mehrphasigem Wechselstrom, der von einer außerhalb des Fahrzeugs liegenden Ladequelle (17) über die Ladestation (7) erhalten wird, in Gleichstrom für die Zuleitung von Gleichstrom zum Gleichstrom/Gleichstrom-Wandler zu steuern und
- während eines Fahrzeug-ans-Netz-Betriebsmodus den Betrieb des Wechselstrom/Gleichstrom-Wandlers zum Umwandeln von Gleichstrom, der vom Gleichstrom/Gleichstrom-Wandler erhalten wird, in einphasigen Wechselstrom oder mehrphasigen Wechselstrom für die Zuleitung des Wechselstroms zu einer außerhalb des Fahrzeugs liegenden elektrischen Last (18) über die Ladestation (7) zu steuern.

4.  Elektrisches Fahrzeugsystem nach einem der vorhergehenden Ansprüche, wobei der Wechselstrom/Gleichstrom-Wandler eine Netzseite mit zwei oder drei Anschlusspunkten für das Erhalten und Ausgeben von einphasigem oder dreiphasigem Wechselstrom und eine Motorseite mit einem ersten und einem zweiten Anschlusspunkt für das Erhalten und Ausgeben von Gleichstrom aufweist und wobei der Gleichstrom/Gleichstrom-Wandler eine erste bidirektionale Schaltanordnung (30), die dazu konfiguriert ist, einen elektrischen Anschluss zwischen dem ersten Anschlusspunkt des Wechselstrom/Gleichstrom-Wandlers und dem gemeinsamen neutralen Punkt der ersten mehrphasigen elektrischen Maschine (5a) selektiv zu öffnen und zu schließen, und eine zweite bidirektionale Schaltanordnung (31), die dazu konfiguriert ist, einen elektrischen Anschluss zwischen den gemeinsamen neutralen Punkten der ersten und der zweiten mehrphasigen elektrischen Maschine (5a, 5b) selektiv zu öffnen und zu schließen, umfasst.

5.  Elektrisches Fahrzeugsystem nach einem der vorhergehenden Ansprüche, wobei das Steuerungssystem (21) während eines Fahrzeuglade-Betriebsmodus dazu konfiguriert ist, den Gleichstrom/Gleichstrom-Wandler in einer Spannungsherunterregulierung zu betreiben, die die Steuerung jeder der ersten und der zweiten bidirektionalen Schaltanordnung (30, 31) beinhaltet, um abwechselnde An- und Aus-Perioden aufzuweisen,

sodass während einer ersten Phase, wenn die erste bidirektionale Schaltanordnung (30) an ist und die zweite bidirektionale Schaltanordnung (31) aus ist, ein Strom vom ersten Anschlusspunkt des Wechselstrom/Gleichstrom-Wandlers über die erste bidirektionale Schaltanordnung (30), eine oder mehrere Statorwicklungen der ersten mehrphasigen elektrischen Maschine (5a), den ersten Wechselrichter (9a), den zweiten Wechselrichter (9b) unter Umgehung oder Nichtumgehung des elektrischen Speichersystems (6), eine oder mehrere Statorwicklungen der zweiten mehrphasigen elektrischen Maschine (5b) und zurück zum zweiten Anschlusspunkt des Wechselstrom/Gleichstrom-Wandlers fließen kann und
sodass während einer zweiten Phase, wenn die erste bidirektionale Schaltanordnung (30) aus ist und die zweite bidirektionale Schaltanordnung (31) an ist, ein Ladestrom von einem Minuspol des elektrischen Speichersystems (6) über den zweiten Wechselrichter (9b), eine oder mehrere Statorwicklungen der zweiten mehrphasigen elektrischen Maschine (5b), die zweite bidirektionale Schaltanordnung (31), eine oder mehrere Statorwicklungen der ersten mehrphasigen elektrischen Maschine (5a), den ersten Wechselrichter (9a) und zurück zu einem Pluspol des elektrischen Speichersystems (6) fließen kann.

6. Elektrisches Fahrzeugsystem nach einem der vorhergehenden Ansprüche, wobei das Steuerungssystem (21) während eines Fahrzeuglade-Betriebsmodus dazu konfiguriert ist, die erste bidirektionale Schaltanordnung (30) mit einem ersten Satz abwechselnder An- und Aus-Perioden zu betreiben und die zweite bidirektionale Schaltanordnung (31) mit einem zweiten Satz abwechselnder An- und Aus-Perioden, die mehr oder weniger synchronisiert angeordnet und in den ersten Satz abwechselnder An- und Aus-Perioden invertiert sind, zu betreiben.

7. Elektrisches Fahrzeugsystem nach einem der vorhergehenden Ansprüche, wobei jeder des ersten und des zweiten Wechselrichters (9a, 9b) mindestens ein Wechselrichterbein für jede Phase der dazugehörigen mehrphasigen elektrischen Maschine beinhaltet und wobei jedes Wechselrichterbein einen mit einer positiven Gleichstromschiene assoziierten oberen Schalter, der mit einem mit einer negativen Gleichstromschiene assoziierten unteren Schalter in Reihe geschaltet ist, beinhaltet, wobei das Steuerungssystem (21) dazu konfiguriert ist, während des Fahrzeuglade-Betriebsmodus

alle oberen und unteren Schalter des ersten und des zweiten Wechselrichters (9a, 9b) sowohl während der ersten als auch während der zweiten Phase in einen offenen Zustand zu versetzen oder
alle oberen und unteren Schalter des ersten Wechselrichters (9a) und alle unteren Schalter des zweiten Wechselrichters (9b) sowohl während der ersten als auch während der zweiten Phase in einen offenen Zustand zu versetzen und einen, zwei, drei oder mehr der oberen Schalter des zweiten Wechselrichters (9b) während der ersten Phase in einen geschlossenen Zustand zu versetzen und alle der oberen Schalter des zweiten Wechselrichters (9b) während der zweiten Phase in einen offenen Zustand zu versetzen oder
alle oberen und unteren Schalter des zweiten Wechselrichters (9b) und alle oberen Schalter des ersten Wechselrichters (9a) sowohl während der ersten als auch während der zweiten Phase in einen offenen Zustand zu versetzen und einen, zwei, drei oder mehr der unteren Schalter des ersten Wechselrichters (9a) während der ersten Phase in einen geschlossenen Zustand zu versetzen und alle der unteren Schalter des ersten Wechselrichters (9a) während der zweiten Phase in einen offenen Zustand zu versetzen.

8. Elektrisches Fahrzeugsystem nach einem der vorhergehenden Ansprüche, wobei der elektrische Anschluss, der sich vom gemeinsamen neutralen Punkt der ersten mehrphasigen elektrischen Maschine (5a) zum gemeinsamen neutralen Punkt der zweiten mehrphasigen elektrischen Maschine (5b) über die zweite bidirektionale Schaltanordnung (31) erstreckt, frei von jeglichem wesentlichen Induktor ist.

9. Elektrisches Fahrzeugsystem nach einem der vorhergehenden Ansprüche, wobei das elektrische Fahrzeugsystem auf einem Stromzuleitungsweg, der sich zwischen dem elektrischen Speichersystem (6) und einem jeglichen des ersten und des zweiten Wechselrichters (9a, 9b) erstreckt, frei von einem Gleichstrom/Gleichstrom-Wandler ist.

10. Elektrisches Fahrzeugsystem nach einem der vorhergehenden Ansprüche, wobei der Wechselstrom/Gleichstrom-Wandler ein einphasiger oder dreiphasiger aktiver Front-End-Gleichrichter ist, der eine Vielzahl von Schalterbeinen beinhaltet, die zwischen einer positiven Schiene und einer negativen Schiene eines Zwischenkreises (DC-Link) angeschlossen sind, wobei jedes Schalterbein mindestens zwei Schalter aufweist, die über einen Zwischenleiter in Reihe geschaltet sind, wobei eine Netzseite des Wechselstrom/Gleichstrom-Wandlers zwei oder drei Anschlusspunkte beinhaltet, die an die Ladestation (7) elektrisch angeschlossen sind, um einphasigen oder dreiphasigen Wechselstrom von einer außerhalb des Fahrzeugs liegenden Ladequelle (17) oder einer außerhalb des Fahrzeugs liegenden elektrischen Last (18) zu erhalten bzw. an sie auszugeben, wobei jeder der zwei oder drei Anschlüsse an einen separaten Zwischenleiter der Vielzahl von Schalterbeinen elektrisch angeschlossen ist.

11. Elektrisches Fahrzeugsystem nach einem der vorhergehenden Ansprüche, wobei das Steuerungssystem (21) während eines Fahrzeug-ans-Netz-Betriebsmodus dazu konfiguriert ist, den Gleichstrom/Gleichstrom-Wandler in einer Spannungsherunterregulierung zu betreiben, die die Steuerung jeder der ersten und der zweiten bidirektionalen Schaltanordnung (30, 31) beinhaltet, um abwechselnde An- und Aus-Perioden aufzuweisen,

sodass während einer ersten Phase, wenn die erste bidirektionale Schaltanordnung (30) aus ist und die zweite bidirektionale Schaltanordnung (31) an ist, ein Strom von einem Pluspol des elektrischen Speichersystems (6) über den ersten Wechselrichter (9a), eine oder mehrere Statorwicklungen der ersten mehrphasigen elektrischen Maschine (5a), die zweite bidirektionale Schaltanordnung (31), eine oder mehrere Statorwicklungen der zweiten mehrphasigen elektrischen Maschine (5b), den zweiten Wechselrichter (9b) und zurück zu einem Minuspol des elektrischen Speichersystems (6) fließen kann und

sodass während einer zweiten Phase, wenn die erste bidirektionale Schaltanordnung (30) an ist und die zweite bidirektionale Schaltanordnung (31) aus ist, ein Strom vom zweiten Anschlusspunkt des Wechselstrom/Gleichstrom-Wandlers über eine oder mehrere Statorwicklungen der zweiten mehrphasigen elektrischen Maschine (5b), den zweiten Wechselrichter (9b), das elektrische Speichersystem (6), den ersten Wechselrichter (9a), eine oder mehrere Statorwicklungen der ersten mehrphasigen elektrischen Maschine (5a), die erste bidirektionale Schaltanordnung (30) und zurück zum ersten Anschlusspunkt des Wechselstrom/Gleichstrom-Wandlers fließen kann.

12. Elektrisches Fahrzeugsystem nach einem der vorhergehenden Ansprüche, wobei jeder des ersten und des zweiten Wechselrichters (9a, 9b) mindestens ein Wechselrichterbein für jede Phase der dazugehörigen mehrphasigen elektrischen Maschine beinhaltet und wobei jedes Wechselrichterbein einen mit einer positiven Gleichstromschiene assoziierten oberen Schalter, der mit einem mit einer negativen Gleichstromschiene assoziierten unteren Schalter in Reihe geschaltet ist, beinhaltet, wobei das Steuerungssystem (21) dazu konfiguriert ist, während des Fahrzeug-ans-Netz-Betriebsmodus einen, zwei, drei oder mehr der oberen Schalter des ersten Wechselrichters (9a) sowohl während der ersten als auch während der zweiten Phase in einen geschlossenen Zustand zu versetzen, einen, zwei, drei oder mehr der unteren Schalter des zweiten Wechselrichters (9b) sowohl während der ersten als auch während der zweiten Phase in einen geschlossenen Zustand zu versetzen und alle der unteren Schalter des ersten Wechselrichters (9a) und alle der oberen Schalter des zweiten Wechselrichters (9b) sowohl während der ersten als auch während der zweiten Phase in einen offenen Zustand zu versetzen.

13. Elektrisches Fahrzeugsystem nach einem der vorhergehenden Ansprüche, wobei das Steuerungssystem (21) dazu konfiguriert ist, während eines Fahrzeug-ans-Netz-Betriebsmodus oder eines Fahrzeuglade-Betriebsmodus den ersten und/oder den zweiten Wechselrichter basierend auf der Winkelposition des Rotors der ersten und/oder der zweiten mehrphasigen elektrischen Maschine (5a, 5b) zu steuern.

14. Elektrisches Fahrzeugsystem nach einem der vorhergehenden Ansprüche, wobei das Steuerungssystem (21) dazu konfiguriert ist,

während eines Fahrzeug-ans-Netz-Betriebsmodus basierend auf der Winkelposition des Rotors der ersten und/oder der zweiten mehrphasigen elektrischen Maschine (5a, 5b) auszuwählen, welcher des einen oder der mehreren oberen Schalter des ersten Wechselrichters (9a) und welcher des einen oder der mehreren unteren Schalter des zweiten Wechselrichters (9b) während der ersten und zweiten Phase in einen geschlossenen Zustand versetzt werden sollte, und/oder während eines Fahrzeuglade-Betriebsmodus basierend auf der Winkelposition des Rotors der ersten und/oder der zweiten mehrphasigen elektrischen Maschine (5a, 5b) auszuwählen, welcher des einen oder der mehreren oberen Schalter des zweiten Wechselrichters (9b) während der ersten Phase in einen geschlossenen Zustand versetzt werden sollte oder welcher des einen oder der mehreren unteren Schalter des ersten Wechselrichters (9a) während der ersten Phase in den geschlossenen Zustand versetzt werden sollte.

15. Verfahren zum Laden eines elektrischen Speichersystems (6) eines elektrischen Fahrzeugsystems, wobei das Verfahren Folgendes umfasst:

Anschließen eines ersten Wechselrichters (9a) an das elektrische Speichersystem (6) und an eine erste mehrphasige elektrische Maschine (5a), die eine Vielzahl von Statorwicklungen (8) aufweist, die in einem Sternanschluss an einen gemeinsamen neutralen Punkt der ersten mehrphasigen elektrischen Maschine (5a) angeschlossen sind, wobei der erste Wechselrichter (9a) eine Vielzahl von Schalterbeinen (10, 11, 12) mit Schaltern (10a, 10b, 11a, 11b, 12a, 12b) aufweist, Anschließen eines zweiten Wechselrichters (9b) an das elektrische Speichersystem (6) und an eine zweite mehrphasige elektrische Maschine (5b), die eine Vielzahl von Statorwicklungen (13) aufweist, die in einem Sternanschluss an einen gemeinsamen neutralen Punkt der zweiten mehrphasigen elektrischen Maschine (5b) angeschlossen sind, wobei der zweite Wechselrichter (9b) eine Vielzahl von Schalterbeinen (14, 15, 16) mit Schaltern (14a, 14b) aufweist, **dadurch gekennzeichnet, dass** das Verfahren ferner Folgendes umfasst:

Anschließen eines bidirektionalen Gleichstrom/Gleichstrom-Auf-/Abwärtswandlers (Buck-Boost-Wandler) an den gemeinsamen neutralen Punkt der ersten mehrphasigen elektrischen Maschine (5a) und an den gemeinsamen neutralen Punkt der zweiten mehrphasigen elektrischen Maschine (5b) zur Verwendung mindestens einer Statorwicklung jeder der ersten und der zweiten mehrphasigen elektrischen Maschine (5a, 5b) als Buck-Boost-Induktivität,

Anschließen eines bidirektionalen Wechselstrom/Gleichstrom-Wandlers an den Gleichstrom/Gleichstrom-Wandler und an eine Ladestation (7) mit oder ohne eine dazwischenliegende Elektrofilteranordnung und Bereitstellen eines elektronischen Steuerungssystems (21) zum Steuern des Betriebs des elektrischen Fahrzeugsystems,

wobei der erste und der zweite Wechselrichter (9a, 9b), das elektrische Speichersystem (6), die erste und zweite mehrphasige elektrische Maschine (5a, 5b), der bidirektionale Gleichstrom/Gleichstrom-Auf-/Abwärtswandler (Buck-Boost-Wandler), der bidirektionale Wechselstrom/Gleichstrom-Wandler und die Ladestation (7) Teil des elektrischen Fahrzeugsystems sind.

## Revendications

1. Système électrique de véhicule comprenant :

   un système de stockage électrique (6),
   une première machine électrique multiphasée (5a) ayant une pluralité d'enroulements statoriques (8) connectés en étoile à un point neutre commun de la première machine électrique multiphasée (5a),
   un premier onduleur (9a) connecté fonctionnellement au système de stockage électrique (6) et à la première machine électrique multiphasée (5a), dans lequel le premier onduleur (9a) a une pluralité de branches de commutation (10, 11, 12) avec des commutateurs (10a, 10b, 11a, 11b, 12a, 12b),
   une seconde machine électrique multiphasée (5b) ayant une pluralité d'enroulements statoriques (13) connectés en étoile à un point neutre commun de la seconde machine électrique multiphasée (5b),
   un second onduleur (9b) connecté fonctionnellement au système de stockage électrique (6) et à la seconde machine électrique multiphasée (5b), dans lequel le second onduleur (9b) a une pluralité de branches de commutation (14, 15, 16) avec des commutateurs (14a, 14b),
   **caractérisé en ce que** le système électrique de véhicule comprend en outre un convertisseur CC/CC abaisseur-élévateur bidirectionnel connecté fonctionnellement au point neutre commun de la première machine électrique multiphasée (5a) et au point neutre commun de la seconde machine électrique multiphasée (5b) et configuré pour utiliser au moins un enroulement statorique de chacune des première et seconde machines électriques multiphasées (5a, 5b) comme inductance abaisseur-élévateur,
   un convertisseur CA/CC bidirectionnel connecté fonctionnellement au convertisseur CC/CC et à une borne de charge (7) avec ou sans un agencement de filtre électrique intermédiaire, et
   un système de commande électronique (21) pour commander le fonctionnement du système électrique de véhicule.

2. Système électrique de véhicule selon la revendication 1, dans lequel le système de commande électronique (21) est fonctionnellement couplé au convertisseur CC/CC bidirectionnel et aux premier et second onduleurs (9a, 9b) et configuré pour :

   - pendant un mode de fonctionnement de charge du véhicule, commander le fonctionnement du convertisseur CC/CC et des premier et/ou second onduleurs pour convertir le CC fourni par le convertisseur CA/CC en CC modifié et pour fournir ledit CC modifié au système de stockage électrique (6) via les points neutres communs des première et seconde machines électriques multiphasées (5a, 5b), et
   - pendant un mode de fonctionnement véhicule-réseau, commander le fonctionnement du premier et/ou du second onduleur et du convertisseur CC/CC pour fournir du CC depuis le système de stockage électrique (6) au convertisseur CC/CC via les points neutres communs des première et seconde machines électriques multiphasées (5a, 5b), et pour convertir ledit CC en un CC modifié, pour le fournir audit convertisseur CA/CC.

3. Système électrique de véhicule selon l'une quelconque des revendications précédentes, dans lequel le système de commande électronique (21) est fonctionnellement couplé au convertisseur CA/CC bidirectionnel et configuré pour :

   - pendant un mode de fonctionnement de charge du véhicule, commander le fonctionnement du convertisseur CA/CC pour convertir en CC le CA monophasé ou le CA multiphasé reçu en provenance d'une source de charge externe au véhicule (17) via la borne de charge (7), pour fournir du CC audit convertisseur CC/CC, et
- pendant un mode de fonctionnement véhicule-réseau, commander le fonctionnement du convertisseur CA/CC pour convertir le CC reçu en provenance dudit convertisseur CC/CC en CA monophasé ou CA multiphasé, pour fournir ledit CA à une charge électrique externe au véhicule (18) via la borne de charge (7).

4. Système électrique de véhicule selon l'une quelconque des revendications précédentes, dans lequel le convertisseur CA/CC a un côté réseau avec deux ou trois points de connexion pour recevoir et fournir du CA monophasé ou triphasé, et un côté moteur avec des premier et second points de réception et de fourniture d'un CC, et dans lequel le convertisseur CC/CC comprend un premier agencement de commutation bidirectionnel (30) configuré pour ouvrir et fermer sélectivement une connexion électrique entre le premier point de connexion du convertisseur CA/CC et le point neutre commun des premières machines électriques multiphasées (5a) et un second agencement de commutation bidirectionnel (31) configuré pour ouvrir et fermer sélectivement une connexion électrique entre les points neutres communs des première et seconde machines électriques multiphasées (5a, 5b).

5. Système électrique de véhicule selon l'une quelconque des revendications précédentes, dans lequel le système de commande (21), pendant un mode de fonctionnement de charge du véhicule, est configuré pour faire fonctionner le convertisseur CC/CC en abaissement de tension impliquant la commande de chacun des premier et second agencements de commutation bidirectionnels (30, 31) pour avoir des périodes d'activation et de désactivation alternées,

de sorte que pendant une première phase lorsque le premier agencement de commutation bidirectionnel (30) est activé et le second agencement de commutation bidirectionnel (31) est désactivé, un courant peut circuler depuis le premier point de connexion du convertisseur CA/CC, en passant par le premier agencement de commutation bidirectionnel (30), un ou plusieurs enroulements statoriques de la première machine électrique multiphasée (5a), le premier onduleur (9a), le second onduleur (9b) tout en contournant ou non le système de stockage électrique (6), un ou plusieurs enroulements statoriques de la seconde machine électrique multiphasée (5b), en arrivant au second point de connexion du convertisseur CA/CC, et
de sorte que pendant une seconde phase lorsque le premier agencement de commutation bidirectionnel (30) est désactivé et le second agencement de commutation bidirectionnel (31) est activé, un courant de charge peut circuler depuis un pôle négatif du système de stockage électrique (6), en passant par le second onduleur (9b), un ou plusieurs enroulements statoriques de la seconde machine électrique multiphasée (5a), le second agencement de commutation bidirectionnel (31), un ou plusieurs enroulements statoriques de la première machine électrique multiphasée (5a), le premier onduleur (9a), en arrivant à une borne positive du système de stockage électrique (6).

6. Système électrique de véhicule selon l'une quelconque des revendications précédentes, dans lequel le système de commande (21), pendant un mode de fonctionnement de charge du véhicule, est configuré pour faire fonctionner le premier agencement de commutation bidirectionnel (30) avec un premier ensemble de périodes d'activation et de désactivation alternées, et faire fonctionner le second agencement de commutation bidirectionnelle (31) avec un second ensemble de périodes d'activation et de désactivation alternées, qui sont agencées de manière plus ou moins synchronisées et inversées par rapport au premier ensemble de périodes d'activation et de désactivation alternées.

7. Système électrique de véhicule selon l'une quelconque des revendications précédentes, dans lequel chacun des premier et second onduleurs (9a, 9b) comporte au moins une branche d'onduleur pour chaque phase de la machine électrique multiphasée associée, et dans lequel chaque branche d'onduleur comporte un commutateur supérieur associé à un rail CC positif connecté en série avec un commutateur inférieur associé à un rail CC négatif, dans lequel le système de commande (21) est configuré pour, pendant ledit mode de fonctionnement de charge du véhicule,

mettre tous les commutateurs supérieurs et inférieurs des premier et second onduleurs (9a, 9b) dans un état ouvert pendant à la fois la première et la seconde phase, ou
mettre tous les commutateurs supérieurs et inférieurs du premier onduleur (9a) et tous les commutateurs inférieurs du second onduleur (9b) dans un état ouvert pendant à la fois la première et la seconde phase, et mettre un, deux, trois ou plus des commutateurs supérieurs du second onduleur (9b) dans un état fermé pendant la première phase, et mettre tous les commutateurs supérieurs du second onduleur (9b) dans un état ouvert pendant la seconde phase, ou

mettre tous les commutateurs supérieurs et inférieurs du second onduleur (9b) et tous les commutateurs supérieurs du premier onduleur (9b) dans un état ouvert pendant à la fois la première et la seconde phase, et mettre un, deux, trois ou plus des commutateurs inférieurs du premier onduleur (9a) dans un état fermé pendant la première phase, et mettre tous les commutateurs inférieurs du premier onduleur (9a) dans un état ouvert pendant la seconde phase.

8. Système électrique de véhicule selon l'une quelconque des revendications précédentes, dans lequel la connexion électrique s'étendant du point neutre commun de la première machine électrique multiphasée (5a) au point neutre commun de la seconde machine électrique multiphasée (5b) via le second agencement de commutation bidirectionnelle (31) est exempt de tout inducteur substantiel.

9. Système électrique de véhicule selon l'une quelconque des revendications précédentes, dans lequel le système électrique de véhicule est exempt de convertisseur CC/CC dans un chemin d'alimentation électrique s'étendant entre le système de stockage électrique (6) et l'un quelconque des premier et second onduleurs (9a, 9b).

10. Système électrique de véhicule selon l'une quelconque des revendications précédentes, dans lequel le convertisseur CA/CC est un redresseur frontal actif monophasé ou triphasé comportant une pluralité de branches de commutation connectées entre un rail positif et un rail négatif d'une liaison CC, dans lequel chaque branche de commutation a au moins deux commutateurs connectés en série via un conducteur intermédiaire, dans lequel un côté réseau du convertisseur CA/CC comporte deux ou trois points de connexion connectés électriquement à la borne de charge (7) pour recevoir et émettre un CA monophasé ou triphasé vers/depuis une source de charge externe au véhicule (17) ou une charge électrique externe au véhicule (18), dans lequel chacune desdites deux ou trois connexions est électriquement connectée à un conducteur intermédiaire séparé de la pluralité de branches de commutation.

11. Système électrique de véhicule selon l'une quelconque des revendications précédentes, dans lequel le système de commande (21), pendant un mode de fonctionnement véhicule-réseau, est configuré pour faire fonctionner le convertisseur CC/CC en élévation de tension impliquant la commande de chacun des premier et second agencements de commutation bidirectionnels (30, 31) pour avoir des périodes d'activation et de désactivation alternées,

de sorte que, pendant une première phase, lorsque le premier agencement de commutation bidirectionnel (30) est désactivé et le second agencement de commutation bidirectionnel (31) est activé, un courant peut circuler depuis un pôle positif du système de stockage électrique (6), en passant par le premier onduleur (9a), un ou plusieurs enroulements statoriques de la première machine électrique multiphasée (5b), le second agencement de commutation bidirectionnel (31), un ou plusieurs enroulements statoriques de la seconde machine électrique multiphasée (5a), le second onduleur (9b), en arrivant à une borne négative du système de stockage électrique (6), et

de sorte que, pendant une seconde phase, lorsque le premier agencement de commutation bidirectionnel (30) est activé et le second agencement de commutation bidirectionnel (31) est désactivé, un courant peut circuler depuis le second point de connexion du convertisseur CA/CC, en passant par un ou plusieurs enroulements statoriques de la seconde machine électrique multiphasée (5b), le second onduleur (9b), le système de stockage électrique (6), le premier onduleur (9a), un ou plusieurs enroulements statoriques de la première machine électrique multiphasée (5a), le premier agencement de commutation bidirectionnelle (30) en arrivant au premier point de connexion du convertisseur CA/CC.

12. Système électrique de véhicule selon l'une quelconque des revendications précédentes, dans lequel chacun des premier et second onduleurs (9a, 9b) comporte au moins une branche d'onduleur pour chaque phase de la machine électrique multiphasée associée, et dans lequel chaque branche d'onduleur comporte un commutateur supérieur associé à un rail CC positif connecté en série avec un commutateur inférieur associé à un rail CC négatif, dans lequel le système de commande (21) est configuré pour, pendant ledit mode de fonctionnement véhicule-réseau, mettre un, deux, trois ou plus des commutateurs supérieurs du premier onduleur (9a) dans un état fermé pendant à la fois la première et la seconde phase, mettre un, deux, trois ou plus des commutateurs inférieurs du second onduleur (9a) dans un état fermé pendant la première et la seconde phase, et mettre tous les commutateurs inférieurs du premier onduleur (9a) et tous les commutateurs supérieurs du second onduleur (9b) dans un état ouvert pendant à la fois la première et la seconde phase.

13. Système électrique de véhicule selon l'une quelconque des revendications précédentes, dans lequel le système de commande (21) est configuré pour, pendant un mode de fonctionnement véhicule-réseau ou un mode de fonctionnement de charge du véhicule, commander le premier et/ou le second onduleur sur la base de la position angulaire du rotor de la première et/ou de la seconde machine électrique multiphasée (5a, 5b).

14. Système électrique de véhicule selon l'une quelconque des revendications précédentes, dans lequel le système de commande (21) est configuré pour,

pendant un mode de fonctionnement véhicule-réseau, sélectionner lequel parmi les un ou plusieurs commutateurs supérieurs du premier onduleur (9a) et lequel parmi les un ou plusieurs commutateurs inférieurs du second onduleur (9a) doivent être mis dans un état fermé pendant les première et seconde phases, sur la base de la position angulaire du rotor de la première et/ou seconde machine électrique multiphasée (5a, 5b), et/ou

pendant un mode de fonctionnement de charge du véhicule, sélectionner lequel parmi les un ou plusieurs commutateurs supérieurs du second onduleur (9b) dans un état fermé pendant la première phase, ou lequel parmi les un ou plusieurs commutateurs inférieurs du premier onduleur (9a) doit être mis dans l'état fermé pendant la première phase, sur la base de la position angulaire du rotor de la première et/ou seconde machine électrique multiphasée (5a, 5b).

15. Procédé de charge d'un système de stockage électrique (6) d'un système électrique de véhicule, le procédé comprenant :

la connexion d'un premier onduleur (9a) au système de stockage électrique (6) et à une première machine électrique multiphasée (5a) ayant une pluralité d'enroulements statoriques (8) connectés en étoile à un point neutre commun de la première machine électrique multiphasée (5a), dans lequel le premier onduleur (9a) a une pluralité de branches de commutation (10, 11, 12) avec des commutateurs (10a, 10b, 11a, 11b, 12a, 12b), la connexion d'un second onduleur (9b) au système de stockage électrique (6) et à une seconde machine électrique multiphasée (5b) ayant une pluralité d'enroulements statoriques (13) connectés en étoile à un point neutre commun de la seconde machine électrique multiphasée (5b), dans lequel le second onduleur (9b) a une pluralité de branches de commutation (14, 15, 16) avec des commutateurs (14a, 14b),
**caractérisé en ce que** le procédé comprend en outre :

la connexion d'un convertisseur CC/CC abaisseur-élévateur bidirectionnel au point neutre commun de la première machine électrique multiphasée (5a) et au point neutre commun de la seconde machine électrique multiphasée (5b) pour utiliser au moins un enroulement statorique de chacune des première et seconde machines électriques multiphasées (5a, 5b) comme inductance abaisseur-élévateur,
la connexion d'un convertisseur CA/CC bidirectionnel au convertisseur CC/CC et à une borne de charge (7) avec ou sans un agencement de filtre électrique intermédiaire, et
la fourniture d'un système de commande électronique (21) pour commander le fonctionnement du système électrique de véhicule,
dans lequel les premier et second onduleurs (9a, 9b), le système de stockage électrique (6), les première et seconde machines électriques multiphasées (5a, 5b), le convertisseur CC/CC bidirectionnel abaisseur-élévateur, le convertisseur CA/CC bidirectionnel et la borne de charge (7) font partie du système électrique de véhicule.

FIG.1

2a  5a  7  3  6  2b  5b

FIG.2

FIG.3

FIG.4

FIG.5A

FIG.5B

FIG.6A

FIG.6B

FIG.7A

FIG.7B

FIG.8A

FIG.8B

FIG.9

FIG.10

FIG.11

FIG.12

FIG.13

FIG.14

FIG.15

**EP 3 988 377 B1**

**Patent documents cited in the description**

- US 2010096926 A1
- WO 2018227307 A1
- US 20070158948 A1
- JP 2013132197 A
- US 8912738 B2